# EUROPÄISCHE PATENTSCHRIFT

(11) **EP 2 501 632 B1**
(45) Veröffentlichungstag und Bekanntmachung des Hinweises auf die Patenterteilung: **16.07.2014**
(21) Anmeldenummer: 10779451.3
(22) Anmeldetag: 09.11.2010
(51) Int. Cl.: B65G 17/20, B65G 17/32, B65G 21/18, B65G 23/14, B65H 29/00

(54) **FÜHRUNGSANORDNUNG MIT EINEM TRANSPORTORGAN**
GUIDE ARRANGEMENT HAVING A TRANSPORT MEMBER
SYSTÈME DE GUIDAGE COMPRENANT UN ORGANE DE TRANSPORT

(30) Priorität: 18.11.2009 CH 17812009
(43) Veröffentlichungstag der Anmeldung: 26.09.2012
(73) Patentinhaber: Müller Martini Holding AG, 6052 Hergiswil (CH)
(72) Erfinder: OPPLIGER, Jean-Claude, CH-8155 Niederhasli (CH); LANDOLT, Michael, CH-4665 Oftringen (CH)
(74) Vertreter: Liebe, Rainer
(86) Internationale Anmeldenummer: PCT/CH2010/000281
(87) Internationale Veröffentlichungsnummer: WO 2011/060560

(56) Entgegenhaltungen:
- EP-A2- 0 540 866
- EP-A2- 0 713 834
- DE-A1- 2 347 459
- DE-U1- 29 722 233
- DE-U1-202008 007 100
- US-A- 5 400 717

## Beschreibung

### Technisches Gebiet

Die Erfindung betrifft eine Führungsanordnung zum Führen der Bewegung eines zum Fördern von Produkten gemäss Oberbegriff des Anspruchs 1.

Die DE 2 347 459 offenbart eine derartige Führungsanordnung.

### Stand der Technik

Fördervorrichtungen mit einer mit Hilfe einer geeigneten Führungsanordnung längs einer vorzugsweise endlos umlaufenden Förderstrecke geführten Förderkette werden zum Transport von Druckprodukten zwischen einzelnen Verarbeitungsstationen, wie etwa Einsteckmaschinen, Adressiervorrichtungen, Klebeapparaten, etc., benutzt. Dabei werden die Druckprodukte üblicherweise von an den Kettengliedern montierten Greifern bzw. Klammern gehalten und gegebenenfalls an den Verarbeitungsstationen aus den Greifern freigegeben. Zur Gewährleistung eines kontinuierlichen Betriebs ist die Förderkette üblicherweise endlos umlaufend längs der durch die Führungsanordnung festgelegten Förderstrecke antreibbar. Die Förderstrecke weist üblicherweise gerade und bogenförmige Abschnitte auf, wobei die bogenförmigen Abschnitte innerhalb einer Horizontalebene, einer Vertikalebene oder einer schräg nach oben oder unten verlaufenden Ebene angeordnet sein können. Entsprechend muss auch die Führungsanordnung geradlinige sowie bogenförmige Führungselemente aufweisen, durch welche die Bögen der Förderstrecke bestimmt werden.

Die Förderstrecke kann sich über eine Länge von 100 m oder mehr erstrecken und dabei einen gesamten Produktionsraum in horizontaler und vertikaler Richtung durchlaufen. Daher kann die zur Festlegung der Förderstrecke dienende Führungsanordnung nicht einstückig gefertigt werden, sondern muss aus einzelnen mit Hilfe von geeigneten Verbindungsanordnungen miteinander verbundenen Führungselementen zusammengesetzt werden. Entsprechende Führungsanordnungen sind bspw. in der WO 99/33731, EP 1 029 815 A1, WO 99/33722, WO 99/33732, WO 99/33730 beschrieben. Bei der Montage der bekannten Führungsanordnungen werden die einzelnen Führungselemente üblicherweise stirnflächenseitig zusammengeführt und mit Hilfe von in die Seitenwände der Führungselemente eingreifenden Klemmeinrichtungen, die wiederum über Verbindungselemente in Form von Schraubbolzen od. dgl. miteinander verbunden sind, fest miteinander verbunden.

Bei der Montage der Führungsanordnungen muss darauf geachtet werden, dass die zur Führung der Bewegung der Förderkette dienenden Führungsflächen der Führungselemente bündig und ohne Abstufungen ineinander übergehen, um einen geräusch- und verschleissarmen Betrieb der die Führungsanordnung und die Förderkette aufweisenden Fördervorrichtung zu gewährleisten. In vielen Fällen machen diese Anforderungen an die Übergänge zwischen den Führungselementen eine Nachbearbeitung dieser Übergänge erforderlich, wie etwa eine Schleifbearbeitung. Aber auch nach einer solchen zusätzlichen Bearbeitung wird in einigen Fällen noch ein unruhiger Lauf der Förderkette längs der Führungsanordnung beobachtet.

Angesichts dieser Probleme im Stand der Technik liegt der Erfindung die Aufgabe zugrunde, eine Führungsanordnung zum Führen der Bewegung einer zum Fördern von Druckprodukten ausgelegten Förderkette anzugeben, welche unter Gewährleistung eines geräuschund verschleissarmen Betriebs einfach montierbar ist, sowie eine Fördervorrichtung mit einer derartigen Führungsanordnung bereitzustellen.

### Darstellung der Erfindung

Hier will die Erfindung Abhilfe schaffen. Der Erfindung, wie sie in den Ansprüchen gekennzeichnet ist, liegt die Aufgabe zugrunde, eine Führungsanordnung vorzuschlagen, welche die Nachteile der zum Stand der Technik gehörenden Anordnungen zu beheben vermag. Aufgabe der Erfindung ist darüber hinaus eine Führungsanordnung bereitzustellen, welche ohne Weiteres auch mit zum Stand der Technik gehörenden Transportsorganen betrieben werden kann. Die erfindungsgemässe Führungsanordnung ist demnach aufgabengemäss nicht nur für ein spezielles zugeschnittenes Transportorgan ausgelegt. Eine weitere Aufgabe der Erfindung ist es, einen geräuscharmen und verschleissminierten Betrieb zu gewährleisten.

Bei der erfindungsgemässen Führungsanordnung werden demnach auf den quer, insbesondere etwa senkrecht, zur Förderstrecke verlaufenden Stirnflächen der einzelnen Führungselemente Verbindungselemente Kraftschlüssig festgelegt, welche anschliessend durch formschlüssigen Eingriff lagerichtig miteinander verbunden werden können. Dabei kann die Festlegung der Verbindungselemente an den Führungselementen werksseitig erfolgen, so dass die aus Führungselement und Verbindungselement bestehenden Baugruppen unter Rückgriff auf Standardbauelemente, wie etwa geradlinig verlaufende Führungselemente, bogenförmig verlaufende Führungselemente und Verbindungselemente vorkonfektioniert werden können. Dabei kann bei der werksseitigen Vorkonfektionierung ein glatter Übergang von Führungselement auf Verbindungselement sichergestellt werden. Am Montageort können die so vorkonfektionierten Baugruppen im Bereich einander zugewandter stimflächenseitiger, d. h., ebenfalls etwa senkrecht zur Förderstrecke verlaufender, Kontaktflächen der Verbindungselemente formschlüssig miteinander verbunden werden, wobei durch die formschlüssige Verbindung der den entsprechenden Führungselementen abgewandten Kontaktflächen eine Selbstzentrierung der vorkonfektionierten Baugruppen zueinander erfolgt, mit der ein glatter Übergang zwischen den zur Führung der Förderkette dienenden Führungsflächen der einzelnen Baugruppen sichergestellt wird. Dabei wurde im Rahmen der Erfindung im besonderen erkannt, dass der durch die Bereitstellung von Führungselementen und Verbindungselementen verursachte Mehraufwand im Hinblick auf die damit erreichte Montagevereinfachung am Montageort ohne weiteres in Kauf genommen werden kann, weil diese Montagevereinfachung eine deutliche Verkürzung der Montagezeit mit sich bringt, welche auch durch die werksseitige Vorkonfektionierung der Baugruppen nicht kompensiert wird.

Der formschlüssige Eingriff einander zugewandter stirnseitiger Kontaktflächen der an den Führungselementen festgelegten Verbindungselemente kann erreicht werden, wenn eine Kontaktfläche mindestens einen Vorsprung und die andere Kontaktfläche mindestens eine den Vorsprung formschlüssig aufnehmende komplementär dazu gebildete Vertiefung und/oder Ausnehmung aufweist. Die Verbindungselemente weisen dabei üblicherweise eine dem Führungselement zugewandte im wesentlichen ebene Begrenzungsfläche sowie eine etwa parallel zu dieser ebenen Begrenzungsfläche verlaufende Kontaktfläche auf, wobei ein Vorsprung der Kontaktfläche sich längs der Förderstrecke etwa in die der dem Führungselement zugewandten Begrenzungsfläche entgegengesetzte Richtung erstreckt, während sich die Vertiefung in Richtung auf die dem Führungselement zugewandte Begrenzungsfläche erstreckt.

Im Hinblick auf die Verminderung der Anzahl von zur Herstellung beliebiger Führungsanordnungen benötigten Bauteilen hat es sich als zweckmässig erwiesen, wenn jede Kontaktfläche mindestens einen Vorsprung und mindestens eine Vertiefung aufweist, derart, dass eine formschlüssige Verbindung im Bereich von zwei einander zugewandten gleichförmigen Kontaktflächen bewirkt werden kann. Dabei sind Vorsprung und Vertiefung der Kontaktfläche vorzugsweise spiegelsymmetrisch bezüglich einer senkrecht zur Förderstrecke verlaufenden Geraden ausgeführt.

Mit Blick auf die gewünschte selbstzentrierende formschlüssige Verbindung der Verbindungselemente bzw. der unter Einsatz der Verbindungselemente hergestellten vorkonfektionierten Baugruppen hat es sich als zweckmässig erwiesen, wenn ein Vorsprung in einer senkrecht zur Förderrichtung verlaufenden Schnittebene eine sich in Richtung auf die benachbarte Kontaktfläche bzw. Vertiefung verjüngende Querschnittsfläche aufweist, wobei auch die zur Aufnahme des Vorsprungs gedachte Vertiefung eine sich entsprechend verjüngende Querschnittsfläche aufweisen kann.

Durch das formschlüssige Ineinandergreifen der Verbindungselemente soll üblicherweise nicht nur ein translatorischer Versatz der daraus hergestellten Baugruppen gegeneinander in einer quer zur Förderrichtung verlaufenden Richtung, sondern auch eine Kippbewegung dieser Baugruppen bezüglich einer parallel zur Förderrichtung verlaufenden Kippachse verhindert werden. In diesem Zusammenhang ist es zweckmässig, wenn mindestens ein Vorsprung und die komplementär dazu ausgeführte Vertiefung in einer sich senkrecht zur Förderrichtung erstreckenden Schnittebene eine einer Drehbewegung um eine parallel zur Förderrichtung verlaufende Drehachse entgegenwirkende Querschnittsfläche aufweist, d. h. wenn diese Querschnittsfläche von einer Kreisscheiben- oder Ringform abweicht.

Eine Verbesserung der Montagegenauigkeit kann erreicht werden, wenn mindestens eine Kontaktfläche zwei, drei oder mehr Vorsprünge aufweist, die im montierten Zustand in entsprechend komplementär ausgebildeten Vertiefungen bzw. Ausnehmungen der anderen Kontaktfläche formschlüssig aufgenommen sind.

Wenngleich auch vorstellbar ist, dass Führungsanordnungen hinreichender Stabilität bereits durch die formschlüssige Verbindung der Kontaktflächen der Verbindungselemente geschaffen werden können, hat es sich mit Blick auf die Betriebszuverlässigkeit erfindungsgemässer Führungsanordnungen als besonders sinnvoll erwiesen, wenn die Verbindungsanordnung eine zum Koppeln der Verbindungselemente im Bereich der Kontaktflächen dienende, vorzugsweise von aussen zugängliche, Befestigungsanordnung aufweist, mit der die formschlüssige Verbindung der Verbindungselemente gesichert werden kann.

- Eine derartige Befestigungsanordnung kann besonders einfach in Form eines sich parallel zur Förderstrecke erstreckenden, ein Verbindungselement durchsetzenden und in einem vorzugsweise in das benachbarte Verbindungselement eingesetzten Gewinde, wie etwa einer von aussen zugängliche Gewindemutter, aufgenommenen Befestigungsbolzens, insbes. Schraubbolzens, verwirklicht sein. Im Hinblick auf die Vermeidung vorspringender Teile im Bereich der Führungsanordnung hat es sich als zweckmässig erwiesen, wenn der Befestigungsbolzen in einer in einer äusseren Begrenzungsfläche des Führungselements gebildeten und sich längs der Förderstrecke erstreckenden nutförmigen Ausnehmung aufgenommen ist, in der der Bolzenkopf beispielsweise für einen Inbusschlüssel zugänglich ist. Die Gewindemutter kann gegen Verdrehung gesichert in einer entsprechenden Aufnahme in einem der Verbindungselemente aufgenommen sein.

Bei der beschriebenen Befestigungsanordnung muss der Befestigungsbolzen innerhalb der nutförmigen Ausnehmung in Richtung der Förderstrecke in die Gewindemutter eingeschraubt werden. Das kann bei der Montage Probleme verursachen. In einigen Fällen hat es sich montagetechnisch als günstig erwiesen, wenn die zum Sichern der formschlüssigen Verbindung dienende Befestigungsanordnung zwei in benachbarte und im montierten Zustand mit ihren Kontaktflächen aneinander anliegende Verbindungselemente einsetzbare und darin arretierbare, sich jeweils quer, insbes. senkrecht, zur Förderstrecke und besonders bevorzugt parallel zueinander erstreckende Befestigungsbolzen mit einem ausserhalb der Verbindungselemente freiliegenden Kopplungskopf aufweist, die über ein bezüglich beiden Kopplungselementen arretierbares Arretierungselement miteinander verbunden sind. Bei dieser Befestigungsanordnung werden die Befestigungsbolzen in entsprechende Ausnehmungen in die Verbindungselemente eingesteckt, wobei die Arretierung der Befestigungsbolzen in den entsprechenden Ausnehmungen der Verbindungselemente mit Hilfe einer Schnappverbindung erfolgen kann. Danach wird das Arretierungselement auf ausserhalb der Verbindungselemente freiliegende Bereiche der Befestigungsbolzen aufgeschoben, um so die formschlüssige Verbindung der Verbindungselemente zu sichern. Insgesamt ist die gerade beschriebene Befestigungsanordnung nach dem Vorbild eines Kettenschlosses ausgeführt, wobei alle Bestandteile, einschl. dem Arretierungselement, in einer äusseren Begrenzungsfläche der Befestigungselemente versenkt angeordnet sein können, um so vorspringende Teile der Führungsanordnung zu vermeiden.

Bei der gerade beschriebenen Montage ist wiederum das Aufschieben des Arretierungselements in einer parallel zur Förderrichtung verlaufenden Richtung erforderlich. Bei einer alternativen Montageform können die Befestigungsbolzen zunächst über das bspw. nach Art eines U-Bügels gebildete Arretierungselement miteinander verbunden und danach in die Aufnahmen der Verbindungselemente eingesetzt werden. Das kann bei schwierigen Montagebedingungen von Vorteil sein.

Im Hinblick auf die Bereitstellung einer zufriedenstellenden Quersteifigkeit der formschlüssigen Verbindung der Verbindungselemente hat es sich als zweckmässig erwiesen, wenn mindestens ein Vorsprung in einer senkrecht zur Förderstrecke verlaufenden Schnittebene einen winkelförmigen Querschnitt aufweist, wobei die dann vorhandenen Schenkel des Vorsprungs einen rechten Winkel miteinander einschliessen können, um so eine besonders hohe Quersteifigkeit in senkrecht zueinander verlaufenden Richtungen bereitzustellen.

Bei einer besonders bevorzugten Ausführungsform der Erfindung dienen die Führungselemente der Führungsanordnung nicht nur der Führung des Förderorgans längs der Förderstrecke, sondern auch dem Schutz des Förderorgans vor Verschmutzungen und mechanischen Belastungen. In diesem Fall begrenzen die Führungselemente und die Verbindungselemente einen sich längs der Förderstrecke erstreckenden, zur Aufnahme des Förderorgans ausgelegten und einseitig offenen Führungskanal. Führungselemente und Verbindungselemente sind bei dieser Ausführungsform der Erfindung in einer sich senkrecht zur Förderstrecke erstreckenden Schnittebene im wesentlichen C-förmig ausgeführt, wobei die sich durchgehend längs der Förderstrecke erstreckende Öffnung des Führungskanals dazu dient, den Durchtritt von an dem Förderorgan festgelegten Funktionseinrichtungen, wie etwa Klammern bzw. Greifern zum Erfassen von Druckprodukten zu ermöglichen.

Im Sinne einer Vermeidung von Vorsprüngen im Bereich der Führungsanordnung, welche Schmutzablagerungen begünstigen, eine Verletzungsgefahr für Bediener und eine Beschädigungsgefahr für längs der Förderstrecke transportierte Druckprodukte bilden können, hat es sich als zweckmässig erwiesen, wenn Führungselemente und Verbindungselemente etwa gleiche Querschnittsflächen in einer senkrecht zur Förderstrecke verlaufenden Schnittebene aufweisen und die parallel zur Förderstrecke verlaufenden äusseren Begrenzungsflächen von Führungselementen und Verbindungselementen nach Verbinden der Führungselemente mit Hilfe der Verbindungselemente miteinander fluchten.

Beim Betrieb von Fördervorrichtungen zum Fördern von Druckprodukten, die zum Fördern der Druckprodukte längs einzelner Verarbeitungsstationen dienen, muss eine genaue Positionierung der Druckprodukte sichergestellt werden, um so eine optimale Verarbeitung der Druckprodukte in den Verarbeitungsstationen sicherzustellen. Im Hinblick auf diese besonderen Anforderungen an Fördervorrichtungen für Druckprodukte wird gemäss einem weiteren Gesichtspunkt der Erfindung eine Führungsanordnung zum Führen der Bewegung eines zum Fördern von Druckprodukten ausgelegten Förderorgans, das aus einer Anzahl Transportorgane besteht, längs einer vorzugsweise endlos umlaufenden Förderstrecke mit einer Mehrzahl von einen sich längs der Förderstrecke erstreckenden, zur Aufnahme der Förderkette ausgelegten und einseitig offenen Führungskanal begrenzenden Führungselementen bereitgestellt, die im wesentlichen dadurch gekennzeichnet ist, dass an jedem Führungselement innerhalb des Führungskanals vier oder mehr mit vier oder mehr an einzelnen Kettengliedern des Transportorgans angeordneten Führungseinrichtungen, insbes. Führungsrollen, zusammenwirkende Führungsflächen angeordnet sind, die sich längs der Förderstrecke erstrecken. Gemäss diesem Gesichtspunkt der Erfindung mit einer Führungsanordnung für Förderketten, deren Kettenglieder vier oder mehr Führungseinrichtungen aufweisen, wird für jede einzelne Führungseinrichtung eine eigene Führungsfläche bereitgestellt, um so die Verkippung des Transportorgans bezüglich der Führungsanordnung besonders zuverlässig vermeiden zu helfen. Selbstverständlich können auch die entsprechend ausgeführten Führungselemente mit Hilfe der vorstehend beschriebenen Verbindungselemente formschlüssig miteinander verbunden sein, so dass die besonders verkippungssichere Führung des Transportorgans unter gleichzeitiger Vermeidung eines übermässigen Montageaufwands bereitgestellt werden kann.

Im Hinblick auf die Vermeidung einer Verkippung des Transportorgans bezüglich der Führungsanordnung hat es sich als sinnvoll erwiesen, wenn eine zweite Führungsfläche der Führungselemente einer Schwenkbewegung des Transportorgans zusammenwirkend mit einer daran anliegenden zweiten Führungseinrichtung des Transportorgans bezüglich einer parallel zur Förderstrecke und parallel zu einer ersten Führungsfläche mit einer daran anliegenden ersten Führungseinrichtung verlaufenden Schwenkachse in einer ersten Schwenkrichtung entgegenwirkend, quer, insbes. etwa senkrecht, zu der ersten Führungsfläche verläuft. Demnach sind die erste und die zweite Führungsfläche in vorzugsweise einen rechten Winkel miteinander einschliessenden Ebenen angeordnet, so dass für entsprechende Führungseinrichtungen des Transportorgans Abstützflächen in zwei quer, insbesondere etwa senkrecht, zueinander verlaufenden Abstützrichtungen bereitgestellt sind.

Eine weitere Verbesserung der Verkippungssicherung der Führungsanordnung kann erreicht werden, wenn eine vorzugsweise etwa parallel zur zweiten Führungsfläche verlaufende dritte Führungsfläche zusammenwirkend mit einer daran anliegenden dritten Führungseinrichtung des Transportorgans einer Schwenkbewegung bezüglich der Schwenkachse in der ersten Schwenkrichtung entgegenwirkt. Dabei ist die dritte Führungsfläche zur Bereitstellung einer spielfreien Führung des Transportorgans zweckmässigerweise in einer senkrecht dazu verlaufenden Richtung derart von der zweiten Führungsfläche beabstandet, dass das Transportorgan mit den an der zweiten Führungsfläche anliegenden zweiten Führungseinrichtungen und den an der dritten Führungsfläche anliegenden dritten Führungseinrichtungen spielfrei bezüglich einer senkrecht zu der zweiten und/oder dritten Führungsfläche verlaufenden Richtung zwischen diesen Führungsflächen geführt ist. Durch Bereitstellung von zwei vorzugsweise etwa parallel zueinander verlaufenden Führungsflächen kann eine spielfreie und gleichzeitig reibungsfreie Führung unter Verwendung von Führungseinrichtungen in Form von bezüglich vorgegebenen Rollenachsen drehbaren Führungsrollen erfolgen. Dabei kann die zweite Führungsrolle in einer senkrecht zur ersten Führungsfläche verlaufenden Richtung von der dritten Führungsrolle beabstandet sein. Mit den bislang beschriebenen drei Führungsflächen wird einer Verkippung des Transportorgans bezüglich der Schwenkachse in einer ersten Schwenkrichtung entgegengewirkt. Eine besonders genaue Führung des Transportorgans längs der Förderstrecke kann erreicht werden, wenn eine vierte Führungsfläche zusammenwirkend mit einer vierten daran anliegenden Führungseinrichtung des Transportorgans einer Schwenkbewegung des Transportorgans bezüglich der Schwenkachse in einer der ersten Schwenkrichtung entgegengesetzten zweiten Schwenkrichtung entgegenwirkt und quer, insbesondere etwa senkrecht, zur zweiten Führungsfläche und vorzugsweise etwa parallel zur ersten Führungsfläche verläuft. Dadurch wird einem Verschwenken bzw. Verkippen des Transportorgans bezüglich einer parallel zur Förderstrecke verlaufenden Schwenk- bzw. Kippachse vollständig entgegengewirkt.

Im Sinne einer spielfreien Führung des Transportorgans innerhalb der Führungsanordnung hat es sich als sinnvoll erwiesen, wenn die vierte Führungsfläche in einer senkrecht dazu verlaufenden Richtung derart von der ersten Führungsfläche beabstandet ist, dass das Transportorgan mit den an der vierten Führungsfläche anliegenden vierten Führungseinrichtungen und den an der ersten Führungsfläche anliegenden ersten Führungseinrichtungen spielfrei bezüglich einer senkrecht zu der ersten und/oder vierten Führungsfläche verlaufenden Richtung geführt ist. Mithin wird auch hier eine spielfreie Führung bezüglich Verschiebungen in einer senkrecht zu der ersten und vierten Führungsfläche verlaufenden Richtung unter Verwendung von Führungseinrichtungen in Form von Führungsrollen unter Vermeidung einer Gleitreibung von Führungsrollen an einer der Führungsflächen ermöglicht, wobei die erste Führungsfläche in einer senkrecht zur zweiten Führungsfläche verlaufenden Richtung von der vierten Führungsfläche beabstandet sein kann.

Im Sinne eines besonders kompakten Aufbaus erfindungsgemässer Führungsanordnungen in einer senkrecht zur Förderstrecke verlaufenden Schnittebene hat es sich als sinnvoll erwiesen, wenn die Schnittlinien einer senkrecht zur Förderstrecke verlaufenden Schnittebene mit den Führungsflächen auf Geraden liegen, die ein in den Führungskanal eingeschriebenes Viereck, insbes. Rechteck, besonders bevorzugt Quadrat, begrenzen. Selbstverständlich können auch anders geartete Querschnitte, beispielsweise mit Wölbungen versehen, zum Einsatz gelangen.

Die gerade beschriebene Anordnung der Führungsflächen ist im Bereich geradlinig verlaufender Abschnitte der Führungsstrecke besonders sinnvoll, weil in diesem Bereich mit den beschriebenen vier Führungsflächen eine spielfreie und gegen Verkippungen gesicherte Führung des Transportorgans erfolgen kann. Im Bereich von bogenförmigen Abschnitten der Förderstrecke muss darauf geachtet werden, dass der in Bogenbereichen auftretende Spurfehler des Transportorgans bzw. der an dem Transportorgan angeordneten Führungselemente nicht zu einem übermässigen Verschleiss führt. In diesem Zusammenhang ist es zweckmässig, wenn die Führungseinrichtungen des Transportorgans mit geringfügigem Spiel zwischen Führungsflächen der Führungsanordnung geführt sind. Eine solche Führung kann sichergestellt werden, wenn in dem Führungskanal eine mit Abstand etwa parallel zur ersten und vorzugsweise etwa koplanar zur vierten Führungsfläche verlaufende fünfte Führungsfläche, eine mit Abstand etwa parallel zur zweiten und vorzugsweise etwa koplanar zur dritten Führungsfläche verlaufende sechste Führungsfläche, eine mit Abstand etwa parallel zur dritten und vorzugsweise etwa koplanar zur zweiten Führungsfläche verlaufende siebte Führungsfläche und/oder eine mit Abstand etwa parallel zur vierten und vorzugsweise etwa koplanar zur ersten Führungsfläche verlaufende achte Führungsfläche bereitgestellt wird.

Bei dieser Anordnung von insgesamt acht Führungsflächen innerhalb des Führungsanordnung kann eine erste Führungsrolle des Transportorgans zwischen der ersten und der fünften Führungsfläche, eine zweite Führungsrolle des Transportorgans zwischen der zweiten und der sechsten Führungsfläche, eine dritte Führungsrolle des Transportorgans zwischen der dritten und der siebten Führungsfläche und eine vierte Führungsrolle des Transportorgans zwischen der vierten und der achten Führungsfläche angeordnet sein, wobei sämtliche Führungsrollen mit geringfügigem Spiel zwischen den Führungsflächen angeordnet sein können, um so einen durch Spurfehler verursachten Verschleiss zu minimieren.

Im Sinne einer geräusch- und verschleissarmen Führung des Transportorgans längs der Förderstrecke der Führungsanordnung hat es sich als sinnvoll erwiesen, wenn den Führungsflächen der Führungselemente Führungsflächen der Verbindungselemente zugeordnet sind, in die die Führungsflächen der Führungselemente übergehen. Diese Führungsflächen der Verbindungselemente sind erfindungsgemäß durch in Ausnehmungen der Verbindungselemente lösbar festlegbare Adapterelemente gebildet. Die Adapterelemente können gleichzeitig Vorsprünge der Verbindungselemente bilden, welche zur formschlüssigen Verbindung der Verbindungselemente beitragen.

In diesem Fall hat es sich als besonders vorteilhaft erwiesen, wenn die Führungsflächen von zwei in im Bereich der Kontaktflächen aneinander anliegenden Verbindungselementen eingesetzten Adapterelementen in einer parallel zu den Kontaktflächen und senkecht zur Förderstrecke verlaufenden Richtung nebeneinander angeordnet sind. Dadurch wird durch zwei aneinanderliegende Adapterelemente gemeinsam ein Führungsflächenabschnitt gebildet. In diesem Führungsflächenabschnitt kann unter Vermeidung übermässiger Anforderungen an die Herstellungstoleranzen eine geräuscharme Bewegung des Transportorgans sichergestellt werden, wenn die nebeneinander liegenden Führungsflächen der Adapter-elemente derart gegenläufig angefast bzw. in Förderrichtung abgeschrägt sind, dass sie eine Mulde in der durch die nebeneinander angeordneten Führungsflächen gebildeten Führungsflächenabschnitt bilden und einen stumpfen Winkel miteinander einschliessen. Eine auf einer angefasten Führungsfläche eines Adapterelements abrollende Führungsrolle geht reibungsarm unter Vermeidung von Absätzen auf die gegenläufig angefaste Führungsfläche des anderen Adapterelements über, um so eine sprungfreie Führung des Transportorgans sicherzustellen.

An zur Sicherstellung einer geräusch- und/oder verschleissarmen Führung dienende Materialien werden oft andere Anforderungen gestellt als an zur Sicherstellung einer ausreichenden Gesamtstabilität der Führungsanordnung erforderliche Materialien. Daher hat es sich als sinnvoll erwiesen, wenn mindestens eine Führungsfläche durch ein lösbar an einem Trägerbereich eines Führungselements festlegbares Laufflächenelement gebildet ist. Montagetechnisch hat es sich in diesem Zusammenhang als zweckmässig erwiesen, wenn der Trägerbereich in Form eines sich längs der Förderstrecke erstreckenden und in einer senkrecht dazu verlaufenden Schnittebene T-förmigen Stegs gebildet ist und das Laufflächenelement in Form eines auf den T-förmigen Steg aufschiebbaren C-Profils gebildet ist. In diesem Fall kann ein an einem Verbindungselement festgelegtes Adapterelement eine Doppelfunktion erfüllen, wenn es nach Festlegen des Verbindungselements an dem Führungselement einen nach Montage des Laufflächenelements auf dem Trägerbereich einer Verschiebung des Laufflächenelements längs der Förderstrecke entgegenwirkenden Anschlag bildet, wobei das auf den Steg aufgeschobene Laufflächenelement einen sich längs der Förderstrecke über einen Teil der Länge des Verbindungselements erstreckenden stegförmigen Trägeransatz übergreifen kann.

Im Sinne einer Trennung von Führungsfunktion des Transportorgans einerseits und Antriebsfunktion für das Transportorgans andererseits hat es sich als zweckmässig erwiesen, wenn die Führungselemente der Führungsanordnung einen vorzugsweise auf der der sich in Förderrichtung erstreckenden Öffnung des Führungskanals abgewandten Seite des die Führungsflächen aufweisenden Führungskanals angeordneten Antriebskanal aufweisen, der in Richtung auf den Führungskanal offen sein kann, so dass zwischen Führungskanal und Antriebskanal eine sich längs der Förderstrecke erstreckende offene Ausnehmung gebildet ist, durch welche beispielweise ein Antriebselement für den Bewegungsablauf sorgt. Führungskanal und Antriebskanal können von miteinander fluchtenden und etwa parallel zueinander verlaufenden Seitenwänden begrenzt sein, welche auf ihren der Öffnung des Führungskanals abgewandten Seite über eine Verbindungswand miteinander verbunden sind. Dabei kann die den Förderkanal auf seiner der Öffnung des Führungskanals abgewandten Seite begrenzende Verbindungswand mindestens eine sich längs der Förderstrecke erstreckende und zum Einführen eines Antriebselements, wie etwa einer Antriebskette, in den Antriebskanal ausgelegte Antriebsöffnung aufweisen.

Eine Vorrichtung zum Fördern von Druckprodukten weist eine erfindungsgemässe Führungsanordnung und ein längs der Führungsanordnung bewegbare und zum Fördern von Druckprodukten ausgelegtes Transportorgan auf. Dabei kann das Transportorgan in einen Führungskanal der Führungsanordnung aufgenommen sein.

Wie vorstehend bereits erläutert, sind die Kettenglieder des Förderorgans einer entsprechenden Fördervorrichtung üblicherweise endlos umlaufend längs einer Förderstrecke antreibbar. Zur Sicherstellung der Bewegbarkeit der Kettenglieder längs der Förderstrecke müssen diese gelenkig im allgemeinen um zwei Achsen unabhängig voneinander verschwenkbar miteinander gekoppelt sein. Die Förderstrecke kann eine Länge von 100 m oder mehr aufweisen. Entsprechend aufwendig ist die Montage der Führungsschienenanordnungen und der Kettenglieder, wobei über die gesamte Förderorganlänge die gelenkige Verbindung zwischen den einzelnen Kettengliedern sichergestellt sein muss.

Folgende Druckschriften sollen hier zum besseren Verständnis des Erfindungsgegenstandes noch eingehender gewürdigt werden.

Bei in der CH 588 647 A5 beschriebenen Förderketten resp. Förderorgane soll die Montage von über Kugelgelenke miteinander verbundenen Kettengliedern dadurch erleichtert werden, dass Gelenkpfannen und Gelenkkörper als äquatoriale Kugelsegmente ausgebildet sind. Der Gedanke äquatorial geteilter Kugelsegmente wird auch in der CH 646 762 A5 und der CH 656 683 A5 aufgegriffen. Allerdings wird durch diese Konstruktion gelenkiger Verbindungen zwischen einzelnen Kettengliedern die Montage der Förderketten an oder in den Förderschienen nicht wesentlich vereinfacht.

Eine gewisse Vereinfachung ergibt sich bei der Montage von Förderketten gemäss der CH 593 187, bei der Kettenglieder aus Kunststoff durch quer zu ihrer Längsrichtung ausgerichtete Schwenkachsen und Naben lösbar miteinander verbunden sind und zusätzliche Teile an Befestigungselementen der Kettenglieder lösbar angebracht sind. Allerdings bereiten auch bei den in dieser Schrift beschriebenen Förderketten die Montage der Kettenglieder an bzw. in den Führungsschienenanordnungen bzw. Führungsschienen beachtliche Probleme. Eine gewisse Montagevereinfachung ergibt sich bei Förderketten gemäss der US 4,638,906, bei denen die einzelnen Kettenglieder durch Verdrehen um eine parallel zur Förderrichtung verlaufende Drehachse voneinander gelöst werden können. Allerdings müssen dafür entsprechende Öffnungen in der Führungsschiene vorgesehen sein.
Bei einer in der EP 1 832 532 A2 beschriebenen Förderkette soll eine Montageerleichterung dadurch erreicht werden, dass das Lagergehäuse aus zwei Lagergehäuseteilen besteht, welche einen kugeligen Lagerkörper übergreifen, um so ein Kugelgelenk zu bilden. Auch hier wird wieder der Gedanke aufgegriffen, die Lagerkörper in Äquatorialebenen zu teilen.

Endlich wird in der EP 1 557 387 A1 auch noch vorgeschlagen, kostengünstige Förderketten dadurch bereitzustellen, dass an jedem Kettenglied der Förderkette wenigstens zwei Klammern oder Greifer zum Erfassen jeweils eines Druckprodukts angebracht sind.

Wie der vorstehenden Erläuterung bekannter Förderketten zum Fördern von Druckprodukten zu entnehmen ist, bereitet die Montage entsprechender Förderketten längs einer durch eine Führungsschienenanordnung vorgegebenen Förderstrecke unter gleichzeitiger Gewährleistung einer ausreichenden Bewegbarkeit der Förderkette längs einer kurvigen Förderstrecke beachtliche Probleme.

Bei einem mit besonderem Vorteil einsetzbaren Transportorgan werden diese Probleme durch eine Weiterbildung der bekannten Förderketten gelöst, die im wesentlichen dadurch gekennzeichnet ist, dass mindestens zwei längs der Förderstrecke hintereinander montierbare Kettenglieder zur Bildung einer Funktionsanordnung starr, aber lösbar miteinander koppelbar sind. Die starre Kopplung einzelner Kettenglieder kann unabhängig von der ansonsten benötigen gelenkigen Verbindung zwischen einzelnen Kettengliedern ausgeführt werden und kann daher auch innerhalb von Führungsschienen noch mit einfachen Montagemitteln bewirkt werden. Dadurch wird die Montage dieser Förderketten durch die starre Verbindung einzelner in Förderrichtung hintereinander montierbarer Kettenglieder innerhalb der Führungsschiene deutlich vereinfacht.

Die ansonsten benötigte Bewegbarkeit des Transportorgans längs einer kurvigen Förderstrecke kann bei derartigen Förderketten dadurch sichergestellt werden, dass neben den zur Bildung einer Funktionsanordnung starr miteinander koppelbaren Kettengliedern auch noch längs der Förderstrecke aufeinanderfolgend montierbare Kettenglieder zur Bildung einer Gelenkanordnung gelenkig miteinander koppelbar sind. Dabei können zwei längs der Förderstrecke aufeinanderfolgend montierbare Funktionsanordnungen unter Bildung einer Gelenkanordnung gelenkig miteinander koppelbar sein. Bei der Montage solcher Förderketten können Förderkettenabschnitte mit einer Anzahl von Gelenkanordnungen und/oder Funktionsanordnungen vorkonfektioniert und in eine erfindungsgemässe ebenfalls aus vorkonfektionierten Baugruppen zusammengesetzte Führungsschienenanordnung eingefädelt werden. Dabei können auch Förderkettenabschnitte und Führungselemente aufweisende Baugruppen vorkonfektioniert werden. Benachbarte Kettenglieder Transportorgans können dann unter Bildung einer Funktionsanordnung eines endlos umlaufenden Förderorgans starr miteinander verbunden werden. Insgesamt ergibt sich dadurch eine deutliche Montagevereinfachung, weil die für die Gewährleistung der Funktionssicherheit des Förderorgans benötigten gelenkigen Verbindungen schon bei der Konfektionierung des Förderorgans resp. der Transportorgane am Produktionsort hergestellt werden und während der Montage am Montageort nur noch starre Verbindungen zwischen einzelnen Kettengliedern gebildet werden müssen.

Im Hinblick auf die von den Kettengliedern geforderten unterschiedlichen Funktionen, wie etwa die Antriebsfunktion und die Führungsfunktion, hat es sich als günstig erwiesen, wenn die durch die starre Verbindung zweier Kettenglieder gebildete Funktionsanordnung ein als ersten Funktionsglied ausgeführtes Kettenglied und ein davon unterscheidbares, als zweites Funktionsglied ausgeführtes Kettenglied aufweist, weil so einzelne Funktionen einzelnen Kettengliedern zugeordnet werden können, was insgesamt zu einer Funktionsverbesserung und/oder Verbesserung der Betriebszuverlässigkeit der Fördervorrichtungen führt. Zur Bildung einer starren Verbindung zwischen den einzelnen Funktionsgliedern einer Funktionsanordnung hat es sich als günstig erwiesen, wenn diese Funktionsglieder in einem Verbindungsbereich formschlüssig ineinandergreifen, insbesondere miteinander verhakt sind, wobei die formschlüssige Verbindung über ein lösbares Verbindungsglied gesichert sein kann.

Die Verbindungsbereiche der einzelnen Funktionsglieder können quer zur Förderrichtung verlaufende hakenförmige Vorsprünge aufweisen, die bei der formschlüssigen Verbindung ineinandergreifen. Dabei kann der Verbindungsbereich eines der Funktionsglieder den Verbindungsbereich des anderen Funktionsgliedes in Förderrichtung übergreifen, um so eine sichere Verbindung herzustellen. Das Verbindungsglied kann besonders einfach in Form eines eine Ausnehmung in einem der Funktionsglieder durchsetzenden und in einem in dem anderen Funktionsglied aufgenommenen Gewinde eingeschraubten Schraubbolzen aufweisen, wobei der Schraubbolzen zweckmässigerweise mit einem an der dem Gewinde entgegengesetzten Seite angeordneten Bolzenkopf zumindest mittelbar an einem Funktionsglied anliegt.

Bei der Montage der Fördervorrichtungen können die einzelnen Funktionsglieder einer Funktionsanordnung demnach zunächst durch den formschlüssigen Eingriff im Verbindungsbereich positioniert und dann in dieser Position mit dem Verbindungsglied arretiert werden. Es hat sich gezeigt, dass die Montage der Fördervorrichtungen besonders einfach durchgeführt werden kann, wenn sich die Bolzenachse des Schraubbolzens quer, insbes. senkrecht, zur Förderrichtung erstreckt, weil durch diese Anordnung besonders viel Platz für Montagemöglichkeiten, im Besonderen Montageöffnungen, in Führungsschienenanordnungen bereitgestellt werden kann. Derartige in Förderrichtung der Führungsschienenanordnung verlaufende schlitzförmige Öffnungen werden innerhalb von Führungsschienenanordnungen schon für die zum Transportieren der Druckprodukte benötigten Funktionseinrichtungen, wie etwa Greifern oder Klammern, benötigt, die sich ausgehend von dem Transportorgan in einer quer zur Förderrichtung verlaufenden Richtung erstrecken und ausserhalb der Führungsschienen frei zugänglich sein müssen.

Bei dieser Anordnung der Funktionseinrichtungen hat es sich im Hinblick auf die gewünschte einfache Montage als besonders sinnvoll erwiesen, wenn der zum Verbinden der Funktionsglieder eingesetzte Schraubbolzen auf seiner dem Gewinde abgewandten Seite eine zum Ankoppeln einer sich quer zur Förderstrecke erstreckenden Funktionseinrichtung, wie etwa eines Greifers, einer Klammer od. dgl., ausgelegte Verbindungseinrichtung durchsetzt. Dabei kann die Verbindungseinrichtung als Bestandteil der Funktionseinrichtung fest damit verbunden sein. Im Hinblick auf die oft angestrebte hohe Modularität von mit Fördervorrichtungen ausgestatteten Anlagen hat es sich als günstig erwiesen, wenn die Verbindungseinrichtung einen Adapter bildet, mit dem die Funktionseinrichtung an das Transportorgan gekoppelt werden kann, wobei zum Ankoppeln unterschiedlicher Funktionseinrichtungen unterschiedliche Verbindungseinrichtungen bzw. Adapter zum Einsatz kommen können.

Wie vorstehend bereits angesprochen, ist der Einsatz voneinander unterscheidbarer Funktionsglieder im Hinblick auf die angestrebte Optimierung der einzelnen Funktionen des Transportorgans besonders hilfreich. In diesem Zusammenhang hat es sich als zweckmässig erwiesen, wenn das erste Funktionsglied einen zum Ankoppeln des Transportorgans an eine Antriebseinrichtung ausgelegten Ankopplungsbereich und das zweite Funktionsglied, d.h. Kettenglied, eine zum Führen des Transportorgans längs einer Führungsschienenanordnungen ausgelegte Führungsvorrichtung aufweist. Durch diese Trennung von Förderfunktion einerseits und Führungsfunktion andererseits wird eine Verbesserung der Betriebszuverlässigkeit von Förderketten erreicht, weil übliche Antriebseinrichtungen im Bereich der Führungsvorrichtung an den Förderketten angreifen, wie bspw. bei dem in der EP 0 540 866 A2 beschriebenen Kettenantrieb, so dass die Führungseinrichtungen der Führungsvorrichtungen durch die gleichzeitige Antriebsfunktion einem erhöhten Verschleiss unterliegen.

Darüber hinaus erfordert der herkömmliche Antrieb von Transportorganen im Bereich der Führungsvorrichtungen einen Eingriff der Fördereinrichtung im Bereich der Führungsschienen bzw. Führungsschienenanordnung und in vielen Fällen auch die Umschlingung eines Antriebselements durch das Transportorgan. Bei der vorgesehenen Trennung von Ankopplungsbereich für die Fördereinrichtung einerseits und Führungsvorrichtung andererseits kann der Kettenantrieb völlig unabhängig von der Führungsfunktion und der Förderfunktion für die Druckprodukte verwirklicht werden. Dadurch wird eine weitere Funktionsoptimierung erreicht, die noch durch die Anordnung des Ankopplungsbereichs im Antriebskanal der Führungsanordnung und die Anordnung der Führungsvorrichtung in dem Führungskanal unterstützt wird.

Im Hinblick auf die Bereitstellung eines besonders grossen Bauraums für die an das Transportorgan anzukoppelnden Funktionseinrichtungen hat es sich als besonders sinnvoll erwiesen, wenn der Ankopplungsbereich für die Antriebseinrichtung an der dem zum Ankoppeln der Funktionseinrichtung, gegebenenfalls. über eine Verbindungseinrichtung, dienenden Bolzenkopf entgegengesetzten Seite der Funktionsanordnung angeordnet ist, so dass bei unterhalb des Transportorgans hängenden Funktionseinrichtungen, wie etwa Greifern, Lamellen, etc. die Antriebseinrichtung oberhalb des Transportorgans angeordnet werden kann und mit den in dieser Lage nach oben von dem Transportorgans wegragenden Ankopplungsbereichen zusammenwirkt.

Der Ankopplungsbereich kann baulich besonders einfach verwirklicht werden, wenn er kammartig mit sich quer, insbes. etwa senkrecht, zur Förderrichtung erstreckenden Kammzinken ausgeführt ist. In die Zwischenräume zwischen diesen Kammzinken können die Kettenbolzen einer Antriebskette zum Zweck des Antriebs des Transportorgans eingreifen. Dabei ist auch keine Umschlingung eines Antriebsrads durch Transportorgans erforderlich. Vielmehr kann der Antrieb des Transportorgans auch längs eines geradlinig verlaufenden Abschnitts der Förderstrecke erfolgen. Dazu ist es allerdings zweckmässig, wenn das Transportorgan auf der der Fördereinrichtung entgegengesetzten Seite auf und/oder in einer Führungsschienenanordnung abgestützt ist. Zu diesem Zweck weist die Führungsvorrichtung des zweiten Funktionsglieds zweckmässigerweise mindestens eine, vorzugsweise zwei, drei oder mehr bezüglich entsprechender Rollenachsen drehbar gelagerte Führungsrollen auf, von denen vorzugsweise jede an einer Führungsfläche der Führungsanordnung anliegt und/oder zwischen zwei Führungsflächen der Führungsanordnung angeordnet ist. Dabei kann die angestrebte Funktionstrennung zwischen Antriebsfunktion einerseits und Führungsfunktion andererseits besonders wirkungsvoll herbeigeführt werden, wenn alle Führungsrollen auf der der zum Ankoppeln einer Funktionseinrichtung, wie etwa eines Greifers, verwendeten Verbindungseinrichtung zugewandten Seite des zum Ankoppeln der Antriebseinrichtung ausgelegten Ankopplungsbereich angeordnet sind, so dass ausserhalb der Führungsrollen frei auf den Ankopplungsbereich zugegriffen werden kann.

Wenngleich die Führungsrollen auch längs der Förderrichtung gegeneinander versetzt an dem zweiten Funktionsglied angeordnet sein können, hat es sich im Hinblick auf eine möglichst kompakte Bauweise von Fördervorrichtungen als zweckmässig erwiesen, wenn zwei Führungsrollen bezüglich einer gemeinsamen, quer, insbes. senkrecht zur Förderstrecke bzw. Förderrichtung verlaufenden ersten Rollenachse drehbar gelagert sind, wobei zwei weitere Führungsrollen bezüglich einer quer, insbes. etwa senkrecht, zu der durch die Förderrichtung und die erste Rollenachse aufgespannten Ebene gemeinsamen zweiten Rollenachse drehbar gelagert sind. Zum Erhalt eines symmetrischen Aufbaus können die Führungsrollen auf den Seiten eines Quadrats angeordnet sein, längs dessen Seitenhalbierenden die Rollenachsen verlaufen. Die Rollenachsen verlaufen zweckmässigerweise jeweils etwa parallel zu zwei, drei oder mehr Führungsflächen der Führungsanordnung.

Es hat sich im Hinblick auf die Bereitstellung einer besonders zuverlässigen Führungsfunktion bei Führungsanordnungen, welche Kurvenbereiche in alle Raumrichtungen aufweisen können, als besonders vorteilhaft erwiesen, wenn die Führungsvorrichtung mindestens vier Führungsrollen aufweist, wobei jeweils zwei Führungsrollen bezüglich einer gemeinsamen Rollenachse drehbar gelagert sind und die beiden Rollenachsen senkrecht zueinander verlaufend in einer Ebene angeordnet sind. Dabei hat es sich wiederum im Sinne einer kompakten Bauweise als besonders zweckmässig erwiesen, wenn mindestens eine Führungsrolle auf einem Führungszapfen des zweiten Funktionsglieds drehbar gelagert ist, weil so die gewünschte Führungsfunktion ohne durchgehende körperliche Rollenachsen verwirklicht werden kann, wobei die drehbare Lagerung bezüglich einer gemeinsamen geometrischen Rollenachse auch dann noch gewährleistet werden kann, wenn zwischen einzelnen zur drehbaren Lagerung der Führungsrollen dienenden Bereichen des zweiten Funktionsglieds, wie etwa Führungszapfen, weitere funktionale Bereiche des Kettenglieds angeordnet sind.

Ebenso wie bei herkömmlichen Förderketten sind auch die Kettenglieder der Gelenkanordnung von Förderketten von Fördervorrichtungen zur Bereitstellung der Bewegbarkeit längs durch ihren Krümmungsradius bestimmte Kurvenführungen um zwei quer, insbes. etwa senkrecht, zueinander verlaufende Schwenkachsen gegeneinander verschwenkbar. Dazu können die Kettenglieder der Gelenkanordnung über eine ein Kugelsegment und ein Kugelschalensegment aufweisende Kugelgelenkanordnung miteinander verbunden sein. Im Sinne eines besonders kompakten Aufbaus von Fördervorrichtungen hat es sich als zweckmässig erwiesen, wenn das Kugelsegment und das Kugelschalensegment an einem Einsteckbereich eines der Kettenglieder angebracht und zusammen mit dem Einsteckbereich in einem Aufnahmebereich des anderen Kettenglieds der Gelenkanordnung aufgenommen sind. Dabei kann der Aufnahmebereich auch zwischen den zur drehbaren Lagerung von Führungsrollen eingesetzten Führungszapfen angeordnet sein.

Zur sicheren Verbindung der Kettenglieder der Gelenkanordnung können das Kugelsegment und das Kugelschalensegment von einem den Aufnahmebereich des anderen Kettenglieds durchsetzenden Verbindungsbolzen durchsetzt werden. In diesem Fall wird bei der Montage also zunächst der das Kugelsegment und das Kugelschalensegment tragende Einsteckbereich des einen Kettenglieds der Gelenkanordnung in den Aufnahmebereich des anderen Kettenglieds eingesetzt und dann der Verbindungsbolzen durch eine das Kugelsegment, das Kugelschalensegment und den Aufnahmebereich durchsetzende Öffnung geführt, um so eine Verbindung zwischen den Kettengliedern herzustellen, bei der das Kugelsegment bezüglich der den Aufnahmebereich aufweisenden Kettenglieder mit Hilfe des Bolzens fixiert sein kann, während das Kugelschalensegment zusammen mit dem Einsteckbereich des entsprechenden Kettenglieds um das Kugelsegment verschwenkt werden kann, um so eine Verschwenkbarkeit des den Einsteckbereich aufweisenden Kettenglieds bezüglich dem den Aufnahmebereich aufweisenden Kettenglied zu ermöglichen.

Im Sinne einer besonders hohen Verschleissfestigkeit einsetzbarer Förderketten hat es sich als zweckmässig erwiesen, wenn das Kugelsegment aus einem metallischen Werkstoff gebildet ist, wobei das Kugelschalensegment aus einem Kunststoff mit geringem Reibungskoeffizienten, wie etwa einem Polyamid und/oder einem teflonhaltigen Kunststoff, gebildet sein kann, wobei es im Sinne einer besonders einfachen Herstellung zweckmässig ist, wenn der Einsteckbereich derart form- und/oder stoffschlüssig mit dem Einsteckbereich ausgeführt ist, dass der Einsteckbereich zusammen mit dem Kugelschalensegment bezüglich dem Kugelsegment drehbar gelagert ist. Der Einsteckbereich kann bspw. durch Umspritzen des Kugelsegmentbereichs mit einem vorzugsweise faserverstärkten Kunststoff gebildet sein. Das Kugelschalensegment kann durch vorgefertigte Teilschalen gebildet werden, die um das Kugelsegment gelegt werden, wobei an einander zugewandten Stirnflächen der Teilschalen Zentrierzapfen und entsprechende Zentrieröffnungen vorgesehen sein können. Im Sinne einer Führung der Verschwenkbewegung der Kettenglieder bezüglich der Bolzenachse des den Einsteckbereich mit dem Aufnahmebereich verbindenden Verbindungsbolzens kann der Einsteckbereich als Kreisscheibensegment einer die Bolzenachse umlaufenden Kreisscheibe ausgeführt sein, wobei auch die der Bolzenachse zugewandte Begrenzungsfläche des Aufnahmebereichs als Kreisscheibenschalensegment ausgeführt sein kann.

Einsetzbare Förderketten können unter Vermeidung einer übermässigen Anzahl unterschiedlicher Bauelemente und einer entsprechenden Lagerhaltung besonders einfach hergestellt werden, wenn ein Kettenglied der Gelenkanordnung als erstes Funktionsglied der Funktionsanordnung und/oder das andere Kettenglied der Gelenkanordnung als zweites Funktionsglied der Funktionsanordnung ausgeführt ist.

Die Verbindung der einzelnen Kettenglieder der Gelenkanordnung kann bei dieser-Ausführungsform unter Vermeidung einer Beeinflussung der Ankopplung der Antriebseinrichtung an das Transportorgan sicher und zuverlässig ausgeführt werden, wenn der Einsteckbereich einen sich quer zur die Funktionsglieder der Funktionsanordnung miteinander verbindende Bolzen und vorzugsweise etwa längs der Förderrichtung erstreckenden Ansatz des ersten Funktionsglieds aufweist. Der kreisscheibensegmentförmige Einsteckbereich kann zur Sicherstellung einer genügenden Steifigkeit bei Belastung durch die daran und üblicherweise unterhalb davon angebrachten Lasten in einer durch die Förderrichtung und die Schraubbolzenachse aufgespannten Ebene angeordnet sein. Dabei kann der Aufnahmebereich von mindestens einer Rollenachse durchsetzt sein, wobei sich die Verbindungsbolzenachse etwa parallel, vorzugsweise etwa kolinear, zur zweiten Rollenachse erstreckt, während die erste Rollenachse in der Ebene des kreisscheibensegmentförmigen Einsteckbereichs angeordnet ist. In diesem Fall ist der Einsteckbereich zwischen den Führungszapfen des zweiten Funktionselements angeordnet, auf denen die sich bezüglich der ersten Rollenachse und/oder zweiten Rollenachse drehbar gelagerten Führungsrollen angebracht sind.

Ein einsetzbares Transportorgan kann durch aufeinanderfolgende Gelenkanordnungen und Funktionsanordnungen bereitgestellt werden, wenn jeweils ein erstes Funktionsglied zwischen zwei zweiten Funktionsgliedern angeordnet und einerseits gelenkig mit einem der ersten Funktionsglieder und andererseits starr mit dem anderen der ersten Funktionsglieder verbunden ist.

### Kurze Beschreibung der Figuren

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich Bezug genommen wird, erläutert. Alle für das unmittelbare Verständnis der Erfindung nicht wesentlichen Elemente sind fortgelassen worden, Gleiche Elemente sind in den verschiedenen Figuren mit den gleichen Bezugszeichen versehen. In der Zeichnung zeigt:
- **Fig. 1**: eine aus Führungsschienenelementen zusammengesetzte Führungsanordnung,
- **Fig. 2**: eine Ansicht der Führungsanordnung gemäss Fig. 1,
- **Fig. 3**: ein Verbindungselement in einer dreidimensionalen Ansicht,
- **Fig. 4**: eine Darstellung des Flansches gemäss Fig. 3 im Aufriss,
- **Fig. 5**: eine zweidimensionale Darstellung eines Adapterelementes mit Anfasung,
- **Fig. 6**: eine Darstellung im Aufriss über die Technik bei der Kopplung zweier Flansche
- **Fig. 7**: ,eine Darstellung im Grundriss über die Technik bei der Kopplung zweier Flansche,
- **Fig. 8**: eine Darstellung des Führungsschienenelementes,
- **Fig. 9**: eine Darstellung der Trägerbereiche für die Führungsschienenelemente;
- **Fig. 10**: eine dreidimensionale Darstellung der Führungsschienenelemente im Führungskanal,
- **Fig. 11**: eine Detaildarstellung eines Laufflächenelementes,
- **Fig. 12**: eine Darstellung der Laufflächensegmente des Adapterelementes,
- **Fig. 13**: eine dreidimensionale Darstellung des Adapterelementes,
- **Fig. 13a**: eine weitere Ansicht des Adapterelementes mit einer Winkelanfasung,
- **Fig. 14**: eine Führungsanordnung im Schnitt mit einem Transportorgan im Einsatz,
- **Fig. 15**: eine weitere Führungsanordnung im Schnitt mit demselben Transportorgan im Einsatz, wobei die rollende Führung hier anders gegenüber Fig. 14 konzipiert ist,
- **Fig. 16**: eine Darstellung der Führungsanordnung mit einem Transportorgan, an dessen Unterseite Greifer für den Transport eines Druckproduktes angebracht sind,
- **Fig. 17**: eine Darstellung einer Führungsanordnung mit tordiertem Verlauf,
- **Fig. 18**: eine Darstellung einer Führungsanordnung längs einem eine horizontal verlaufende Bogenachse umlaufenden Bogensegment
- **Fig. 19**: eine Darstellung eines eine vertikale Bogenachse umlaufenden bogenförmigen Führungselements einer erfindungsgemässen Führungsanordnung
- **Fig. 20**: eine Seitenansicht Förderorgans, weiche aus einer Anzahl Transportorgane gebildet ist,
- **Fig. 21**: eine andere Sicht des Förderorgans gemäss Fig. 20,
- **Fig. 22**: eine Schnittdarstellung eines Transportorgans, dass aus einem ersten und einem zweiten Kettenglied besteht
- **Fig. 23**: eine perspektivische Darstellung des Transportorgans gemäss **Fig.** 22,
- **Fig. 24**: eine weitere Längsschnittdarstellung eines Transportorgans
- **Fig. 25**: eine weitere Schnittdarstellung eines Transportorgans,
- **Fig. 26**: eine Darstellung über die Art und Weise wie die Transportorgane miteinander zusammen gekoppelt werden,
- **Fig. 27**: eine Seitenansicht des ersten Kettengliedes eines Transportorgans,
- **Fig. 28**: eine Schnittdarstellung des ersten Kettengliedes gemäss Fig. 27,
- **Fig. 29**: eine Darstellung eines Kugelschalensegmentes,
- **Fig. 30**: eine Darstellung über die Betriebsweise und Interdependenz von Antriebskette, Transportorgan und Führungsanordnung.

### Wege zur Ausführung der Erfindung

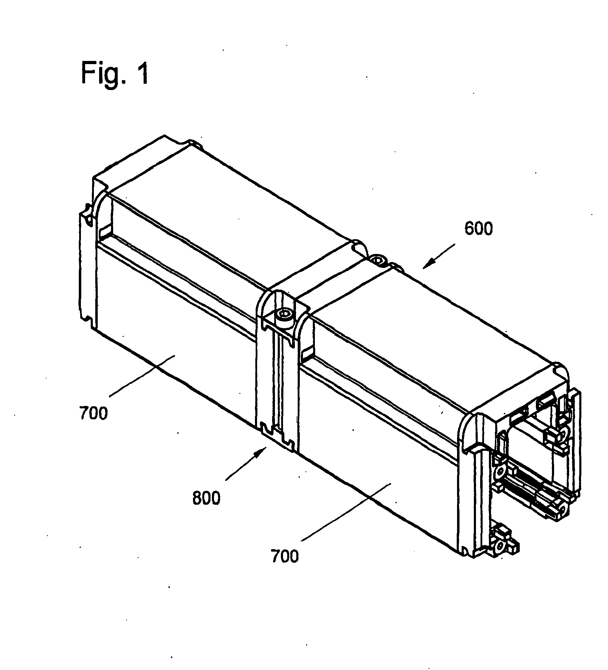

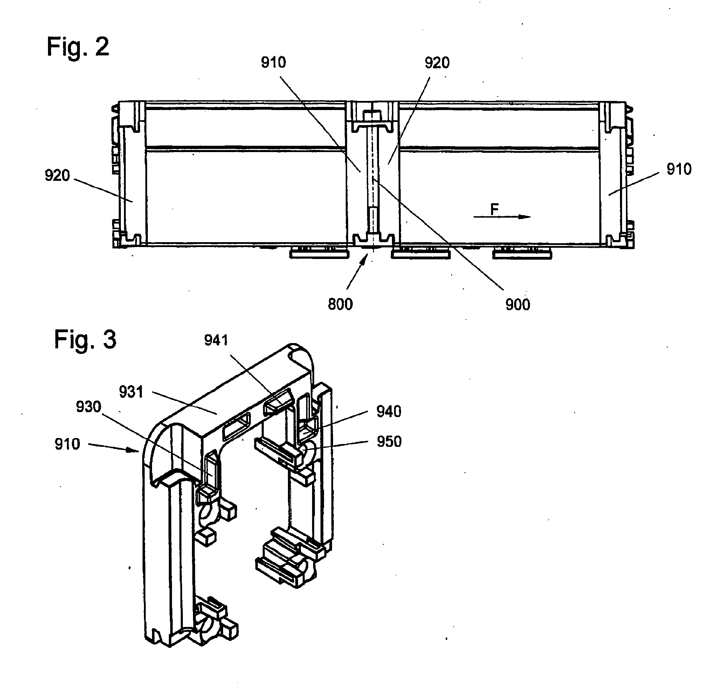

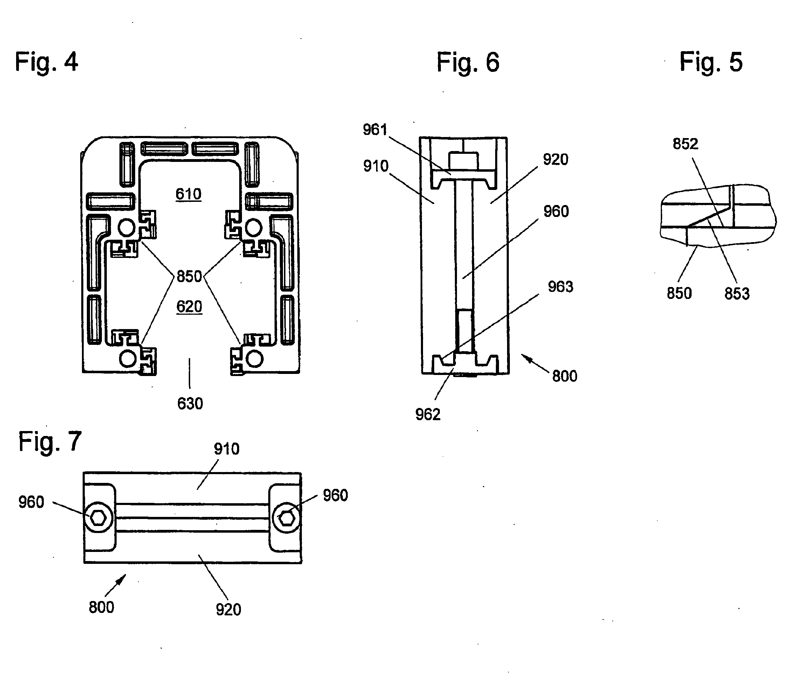

Die in Fig. 1 dargstellte Führungsschienenanordnung 600 umfasst im wesentlichen geradlinig längs der Förderstrecke verlaufende Führungsschienenelemente 700 sowie insgesamt mit 800 bezeichnete Verbindungselemente. Die hier gezeigte Geradlinigkeit ist indessen nicht absolut zu verstehen, noch ist sie über die ganze Förderstrecke vorgegeben. Es können sich ohne Weiteres einer geraden Strecke kurvige Passagen anschliessen, welche sich in der Ebene oder im Raum erstrecken. Grundsätzlich können auch tordierte Förderabschnitte vorliegen. Die Führungsschienenelemente 700 bilden einzelne Kanalabschnitte, welche auf die einander entgegengesetzten Stirnseiten der Führungsschienenelemente 700 miteinander verbunden sind. Vorzugsweise wird hier eine lösbare Verbindung vorgesehen, welche die bestmögliche Flexibilität bietet. Wie in Fig. 1 zu erkennen ist, weisen die Führungsschienenelemente 700 jeweils stirnseitig Verbindungselemente 800 auf, welche näher in den nachfolgenden Figuren beschrieben werden. Die an den einander zugewandten Stirnseiten der Führungsschienenelemente 700 angebrachten Verbindungselemente 800 bestehen aus je einem an den Stirnflächen der Führungsschienenelemente 700 zueinander abgewandten Flanschen, welche über gegengleiche erhöhte und vertiefte Kontaktflächen formschlüssig ineinander greifen. Ein solches Verbindungselement wird in den Figuren 3-5 näher gezeigt. Die Verbindung zwischen den beiden Flanschen geschieht über eine Verschraubung, wobei zum besseren Verständnis wird empfohlen, gleichzeitig auch die Figuren 6 und 7 heranzuziehen, aus welchen die gegengleichen formschlüssigen Kontaktflächen besonders gut ersichtlich sind.

Fig. 2 ist eine Längsansicht zweier zusammengefügten Führungsschienenelemente 700 unter Einbezug der beiden Flansche 910, 920, welche je stirnseitig angeschlagen werden. Die kraftschlüssige Verbindung zwischen den beiden benachbarten Flanschen 910, 920 wird dann durch eine Verschraubung 900 vorgenommen, auf welche weiter unten noch näher eingegangen wird.

Fig. 3 zeigt das Verbindungselement in einer dreidimensionalen Ansicht, welche für das Verständnis der konstruktiven Ausgestaltung hilfsreich ist. Aus dieser Figur ist erkennbar, dass ein an einer Kontaktfläche gebildeter Vorsprung 930 in einer an der gegenüberliegenden Kontaktfläche des angeschlossenen Flansches vorgesehenen Vertiefung 940 eingreift. Der Vorsprung 930 weist eine dreidimensionale vertikale Führung auf, welche mit einer horizontalen vorstehenden Nase erweitert ist. Des Weiteren weist die Jochfläche des Flansches zwei weitere Zentriermittel 931 und 941 auf, welche sich ebenfalls wie beschrieben so verhalten, d.h. sie üben auch eine Führungs- und Zentrierungsfunktion aus. Sowohl die Vorsprung 930, 941 als auch die Vertiefungen 940, 931 weisen allseitig eine sich verjüngende Kontur auf, wodurch die Montage vereinfacht und gleichzeitig wird damit eine optimale Zentrierungsfunktion erreicht. Wie oben bereits erwähnt, wird das jeweilige Verbindungselement 910 oder 920 an dem jeweiligen Führungsschienenelement 700 durch Verschraubung 950 verbunden, und dies vorzugsweise mittels Senkkopfschrauben, welche die Anschlagoberfläche für die axiale Positionierung nicht tangieren.

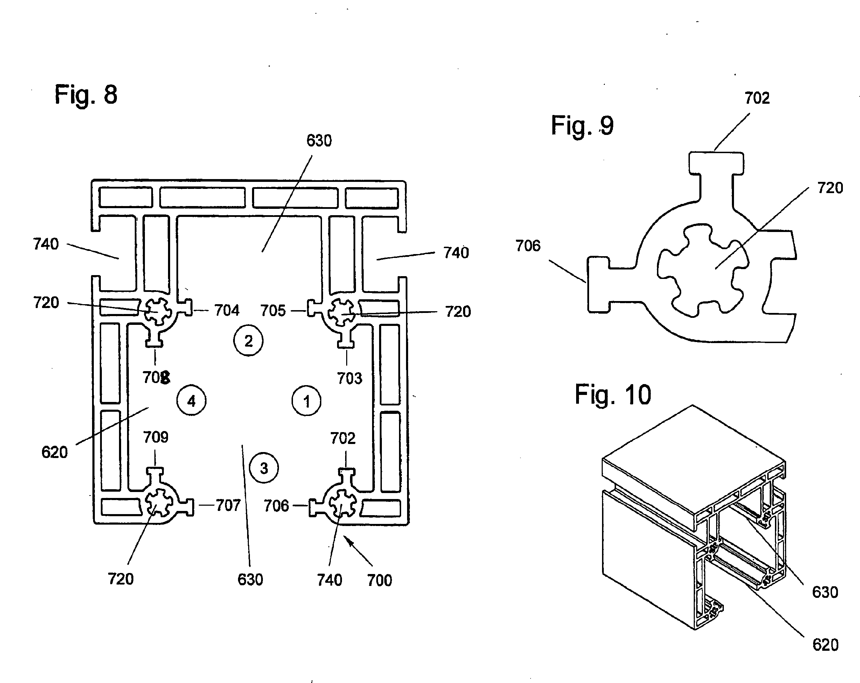

Die Figur 4 zeigt die frontseitige Partie des Flansches 910 gemäss Figur 3. Die inneren Durchführungen entsprechen im wesentlichen der kanalmässigen Ausbildung eines jeden Führungsschienenelementes (Siehe Fig. 1 und 10) auf ihrer ganzen Länge, d.h. Verbindungselement 910 sowie 920 und Führungsschienenelement 700 weisen die selben Durchführungen auf, weshalb die nachfolgenden Beschreibung des Flansches auch für das Führungsschienenelement 700 übertragen werden kann.

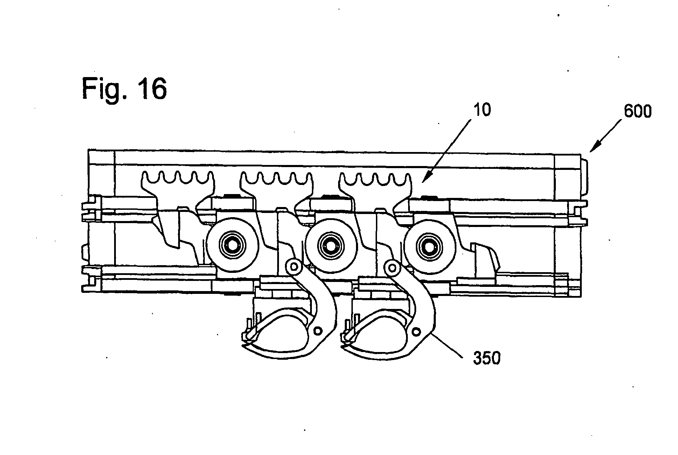

Sonach weist die erfindungsgemässe Führungsanordnung 600 einen Führungskanal 620 und einen Antriebskanal 610 auf. Der Führungskanal 620 weist auf seiner dem Antriebskanal 610 abgewandten Seite eine schlitzförmige Durchbrechung 630 auf, durch die Funktionseinrichtungen 350 der Antriebkette 10 (Siehe auch Fig. 16) aus dem Führungskanal 620 hinausgeführt werden können. Gemäss Fig. 4 sind innerhalb des Flansches 910, 920 den Führungskanal 620 begrenzende Adapterelemente 850 lösbar eingesetzt. Durch diese Adapterelemente 850 wird ein glatter Übergang zwischen den Laufflächen des Flansches 910, 920 und dem anschliessenden Führungsschienenelemente 700 sichergestellt. Dies wird dadurch bewerkstelligt, dass gegenläufig angefaste bzw. in Förderrichtung F abgeschrägte Laufflächenabschnitte 852 der Adapterelemente 850 erreicht, wie dies aus Fig. 5 hervorgeht.

Fig. 6 und 7 zeigen den Aufbau der Verbindungselemente 800, welche die Flanschen 910, 920 und die mit diesen Flanschen fest verbundenen Führungsschienenelemente 700 kraftschlüssig zu einer Führungsschienenanordnung 600 verbinden. Zu diesem Zweck werden zwei Schaftschrauben 960 eingesetzt (Siehe Fig. 7), welche beidseitig der zu verbindenden Flansche in vertikaler Richtung wirken. Oberseitig und unterseitig steht die Schaftschraube 960 mit zwei Briden 961, 962 in Wirkverbindung, wobei die Anschraubung von oben geschieht, demnach weist die untere Bride 962 ein Gewinde zum Anziehen der Schaftschaube 960 auf. In Schraubrichtung weisen die beiden Briden 961, 962 je ein Schwalbenschwanzprofil 963 auf, welche ebenso ausgebildete Schwalbenschwanzpartien der Flanschen erfassen und welche gegengleich wirken. Beim Anziehen der Schaftschraube 960 erzeugen die Schwalbenschanzprofile 963 eine auf die beiden Führungsschienenelemente 700 gegengerichtete horizontale Kraft aus, welche dafür sorgt, dass deren Anschlagflächen fest aufeinander drucken, und so eine sichere übergangslose Verbindung gewährleisten. Es ist in diesem Fall vorteilhaft, wenn die Neigung der Schwalbenschanzprofile einen nicht selbsthemmenden Winkel beschreibt.

In Fig. 8 zeigt ein Profil eines Führungsschienenelementes 700 einer erfindungsgemässen Führungsschienenanordnung 600 d.

Es sei hier hervorgehoben, dass hier nur ein Beispiel eines solchen Profils gezeigt wird, und dass Veränderungen sowohl in der äusseren Geometrie als auch in der Ausgestaltung der inwendigen Durchführungen fallweise Veränderungen erfahren können, welche die Grundphilosophie der Führungsanordnung aber nicht tangieren.

Selbstverständlich ist es aber so, dass grundsätzlich Konkordanz zwischen der inneren Ausgestaltung des Flansches und demjenigen des Führungsschienenelementes vorhanden sein muss, soll die Führungsanordnung ihrer bestimmungsgemässen Funktion erfüllen. Wenn also im Folgenden verschiedene Profile hinsichtlich des Flansches und des Führungsschienenelementes gezeigt werden, so hat dies damit zu tun, dass damit aufgezeigt werden soll, dass die Geometrien über einen grossen Spektrum variieren können. Das Führungsschienenelement 700 begrenzt den Führungskanal 620 und den Antriebskanal 630.

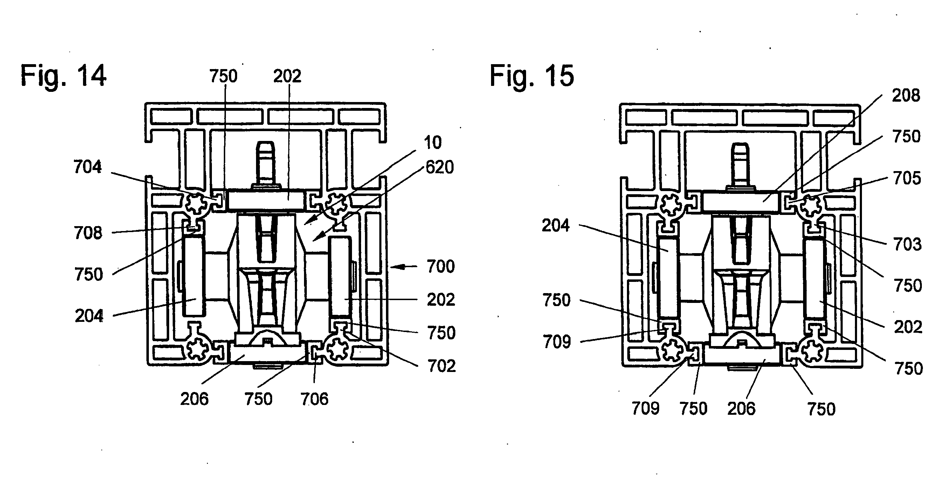

Wie in Fig. 8 zu erkennen ist, weist der Führungskanal 620 einen im Wesentlichen quadratischen Querschnitt auf, wobei an den Ecken des Führungskanals 620 jeweils zwei Trägerbereiche 702 bis 709 für Laufflächenelemente 750 (Vgl. Fig. 15) vorgesehen sind. Die Trägerbereiche 702 bis 709 sind im Wesentlichen in Form von sich längs der Förderstrecke erstreckenden T-Profilen ausgeführt, so dass die Laufflächenelemente 750 der in Fig. 15 dargestellten Art mit im Wesentlichen C-förmigen Profilen lösbar darauf aufgeschoben werden können.

Wie in Fig. 9 und 10 zu erkennen ist, ist in jeder Ecke des Führungskanals 620 zwischen zwei Trägerbereichen 702, 709; 703, 705; 704, 708 bzw. 707, 709 eine sich längs der Förderstrecke erstreckende Ausnehmung 720 vorgesehen, in die zur Befestigung der Verbindungselemente 800 an den Führungsschienenelementen 700 dienende Schraubbolzen eingeschraubt werden. Die Schraubbolzen stabilisieren dabei gleichzeitig die Lage der Trägerbereiche 702 bis 709. Durch die räumliche Nähe zwischen den zur Aufnahme der Schraubbolzen dienenden Ausnehmungen 720 und den Trägerbereichen 702 bis 709 wird eine besonders genaue Ausrichtung der Trägerbereiche 702 bis 709 bezüglich Trägerbereichen benachbarter Verbindungselemente 800 sichergestellt.

In den seitlichen Begrenzungswänden des Antriebskanals 630 sind aussen offene Kanäle 740 angeordnet. Innerhalb dieser Kanäle können von aussen zugängliche und sich mit ihrer Bolzenachse in Förderrichtung erstreckende Schraubbolzen aufgenommen sein, die zur Befestigung der Führungsschienenelemente 700 aneinander über die Flansche 910, 920. Was die Verbindungselemente 800 und deren Befestigungsart wird auf die Beschreibung der Fig. 6 und 7 verwiesen

Wird also beispielsweise das Verbindungselement gemäss Fig. 3-7 in Verbindung mit dem Führungsschienenelement gemäss Fig. 8-10, so ist lediglich dafür zu sorgen, dass die axiale Verbindung zwischen den beiden gewährleistet wird, d.h., dass die Verschraubungen 950 zwischen Verbindungselement und Führungsschienenelement zueinander fluchten. Zu diesem Zweck ist es ohne Weiteres machbar, wenn beispielsweise die Ausnehmungen 720 (Siehe Fig. 8) zu diesem Zweck herangezogen und entsprechend ausgelegt werden. Selbstverständlich kommen auch andere Verbindungsmöglichkeiten zwischen den beiden Elementen zum Tragen, so beispielsweise, wenn statt einer axialen Verschraubung eine umfangsmässige Verankerung vorgenommen wird, wobei dann auch zu berücksichtigen, dass zuletzt noch die Führungsschienenelemente 700 über die Flanschen miteinander verbunden werden müssen.

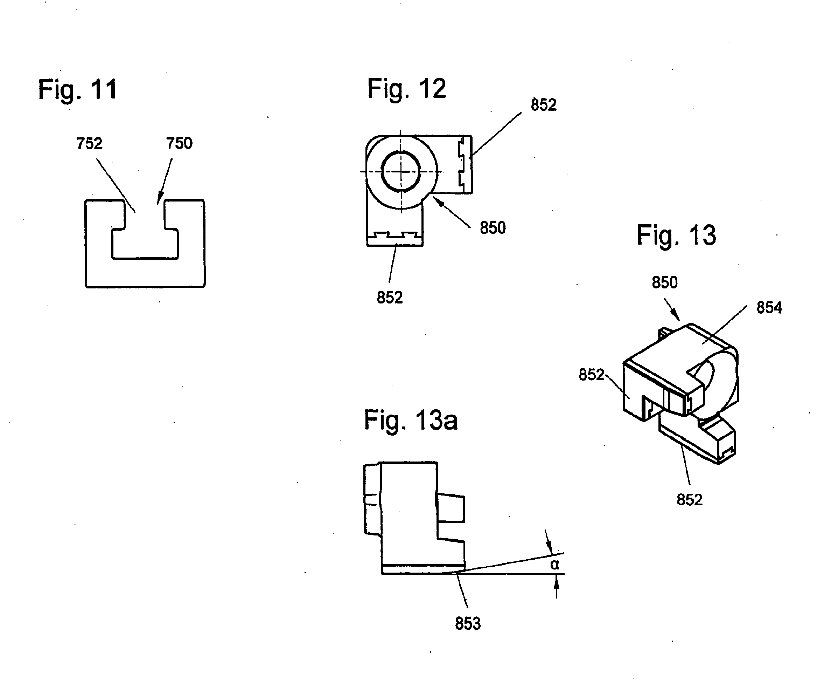

Im Hinblick auf die in Fig. 11 erkennbaren Laufflächenelemente 750 ist ergänzend darauf hinzuweisen, dass diese Laufflächenelemente 750 bei gleichförmigen T-förmigen Aussparungen 752 mit unterschiedlichen Wandstärken ausgeführt werden können, um so gewünschte Führungsbedingungen für die Führungsrollen des im Führungskanal 620 aufgenommenen Transportorgans sicherzustellen, wie nachstehend anhand der Fig. 14 und 15 erläutert wird.

In Fig. 12, 13, 13a ist erkennbar, dass die Laufflächensegmente 852 (Siehe auch Fig. 11) der Adapterelemente 850 lösbar am Grundkörper 854 der Adapterelemente 850 befestigt sind, um auch im Bereich der Adapterelemente 850 die gewünschten Führungseigenschaften erhalten zu können. Es ist erkennbar, dass die Laufflächenelemente 852 einen spitzen Winkel α (Siehe Fig. 13a) mit in Förderrichtung F einschliessenden Laufflächen 853 aufweisen, um so die in Fig. 5 erkennbare gegenläufige Anfasung der Laufflächen erreichen zu können.

Fig. 14 zeigt eine Schnittdarstellung einer Fördervorrichtung mit einer in einem geradlinig verlaufenden Abschnitt einer erfindungsgemässen Führungsanordnung aufgenommenen Förderorgan 10 (Siehe auch Fig. 16), wobei das hier zugrundegelegte Profil einem Führungsschienenelement gemäss Fig. 8-10 entspricht. In dem geradlinig verlaufenden Abschnitt liegt die Führungsrolle 202 des Transportorgans an einem auf den Trägerbereich 702 des Führungsschienenelements 700 aufgeschobenen Laufflächenelement 750 auf. Die Führungsrolle 208 des Transportorgans liegt an einem auf den Trägerbereich 704 aufgeschobenen Laufflächenelement 750 an. Die Führungsrolle 204 liegt an einem auf den Trägerbereich 708 aufgeschobenen Laufflächenelement 750 an und die Führungsrolle 206 liegt an einem auf den Trägerbereich 706 aufgeschobenen Laufflächenelement 750 an. Die Wandstärken der Laufflächenelemente 750 sind so gewählt, dass das mit ihren Führungsrollen 202 bis 208 daran anliegende Transportorgan spielfrei in dem Führungskanal 620 des Führungsschienenelements 700 geführt ist. Durch die räumliche Anordnung der Laufflächenelemente 750 wird dabei eine gleitreibungsfreie Führung des Transportorgans in dem Führungsschienenelement 700 sichergestellt.

Fig. 15 zeigt eine Schnittdarstellung einer Fördervorrichtung längs einer senkrecht zur Förderrichtung verlaufenden Schnittebene eines bogenförmigen Bereichs der Führungsanordnung. In dem bogenförmigen Bereich der Führungsanordnung sind zusätzlich zu den Laufflächenelementen 750 auch noch auf die Trägerbereiche 703, 705, 707 und 709 entsprechende Laufflächenelemente 750 aufgeschoben. Die Wandstärken der Laufflächenelemente 750 sind in den bogenförmigen Bereichen so gewählt, dass die Führungsrollen 202, 204, 206 und 208 mit geringfügigem Spiel zwischen den Trägerbereichen 702 und 703 bzw. 704 und 705 bzw. 708 und 709 bzw. 706 und 707 aufgenommen sind. Dadurch wird ein durch mögliche Spurfehler verursachter Verschleiss an den Laufflächenelementen 750 und den Führungsrollen 202 bis 208 verringert.

In beiden Figuren 14 und 15 wird zum besseren Verständnis der Führungsanordnung und deren Betriebsweise noch ein Transportorgan in dreidimensionaler Darstellung gezeigt. Dieses Transportorgan, das weiter unten noch näher beschrieben wird, bildet eine vorteilhafte Ausführungsform. Dies will heissen, dass die hier beschriebene und unter Schutz gestellte Führungsanordnung ohne Weiteres auch mit anderen Transportorganen betrieben werden kann. Es ist indessen nicht zu verkennen, dass eine Anwendung der hier beschriebenen Führungsanordnung mit dem hier dargestellten Transportorgan grosse Vorteile bietet. Eine Kopplung der beiden bildet sonach nicht eine unabdingbare Voraussetzung. Gemäss Fig. 16 können greiferartige Funktionseinrichtungen 350 über Verbindungseinrichtungen 310 an den Funktionsgliedern der zum Förderorgan 10 gehörenden Transportorgane befestigt sein und die Ausnehmung 630 in dem Förderkanal durchsetzen.

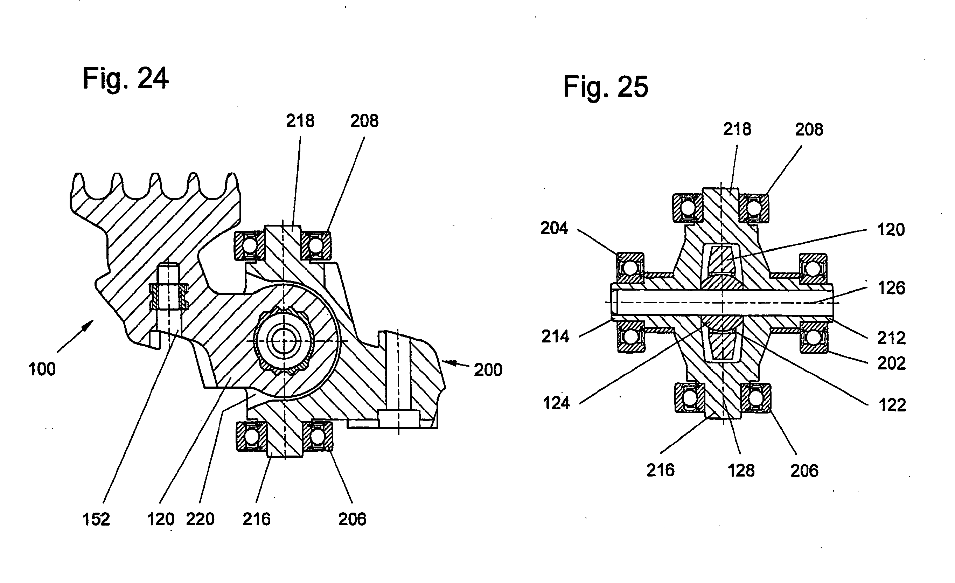

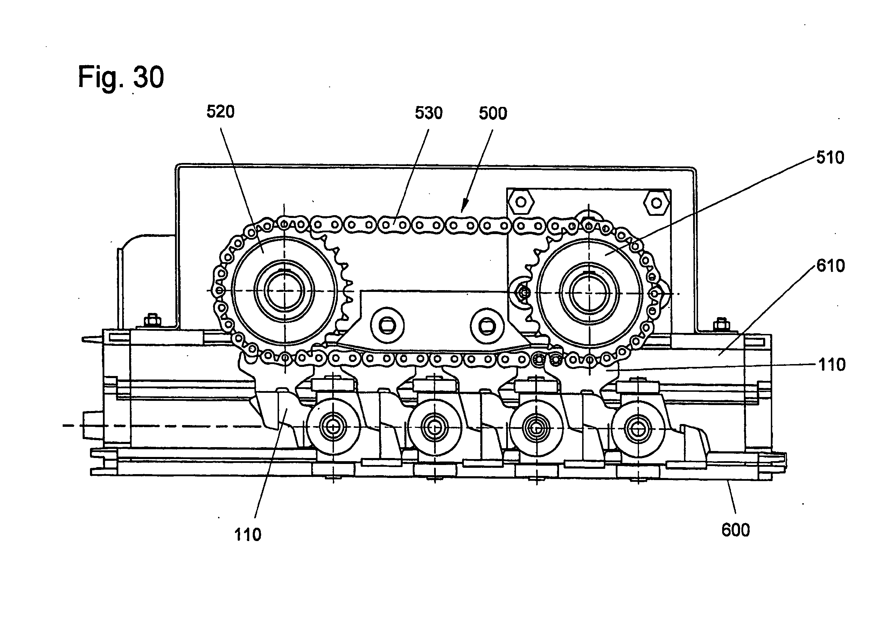

Im Zusammenhang mit dieser Figur 16 lässt sich gut darlegen, dass die dargestellte Führungsschienenanordnung 600 nebst der dargestellten Anwendung auch noch andere Funktionen erfüllen kann. Hier wird insbesondere in den Vordergrunde gerückt, dass an Stelle der dargestellten Greifer 350 in der Zeichnung nicht weiter dargestellten im Wesentlichen flache Bleche unterseitig des Kettengliedes 200 (Siehe Fig. 24, 25) angeordnet werden können. Beispielsweise würde sich hierzu als Verankerungspunkt den Führungszapfen 216 (Siehe Fig. 24, 25) eignen. Trägt nun jedes Kettenglied 200 eines zueinander abgestimmten Bleches ergibt sich eine in sich zusammenhängende Oberfläche. Diese Bleche können auch so beschaffen sein, dass sie materialflexibel sind und sich allenfalls lamellenartig verhalten. Die Anwendung dieser produktkonforme Transportfläche lässt sich damit erreichen, dass die ganze Führungsschienenanordnung 600 um 180° geschwenkt wird, so dass der Kettenantrieb (Siehe Fig. 30, Pos. 530) über das erste Kettenglied 100 dann auf der Unterseite wirkt. Werden diese Bleche dann lamellenartig und schuppenförmig zueinander eingebaut, dann eignen sie sich gut, auch kurvige oder tordierte Abschnitte entlang des Transportweges zu überbrücken. Diese erweiterte Anwendungsmöglichkeit der Führungsschienenanordnung 600 ist eine erfindungsgemässe Ausführungsvariante.

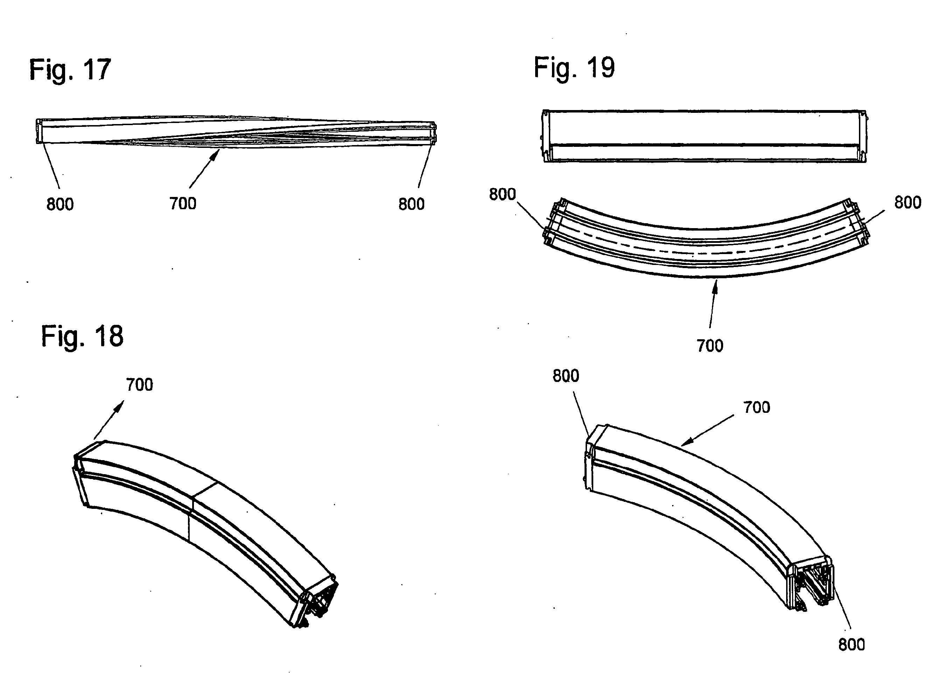

Gemäss Fig. 17 können die Führungsschienenelemente bezüglich einer parallel zur Förderrichtung verlaufenden Torsionsachse tordiert ausgeführt sein, wobei an beiden Stirnflächen der Führungsschienenelemente 700 Verbindungselemente 800 angeordnet sein können.

Gemäss Fig. 18 können die Führungsschienenelemente 700 eine vertikale Bogenachse umlaufend bogenförmig ausgeführt sein, wobei die von der Funktionseinrichtung 350 (Siehe Fig. 16) durchsetzte Öffnung 630 (Siehe Fig. 8) der Bogenachse zugewandt sein kann.

Endlich können die Führungsschienenelemente 700 gemäss Fig. 19 auch eine horizontale Bogenachse umlaufend ausgeführt sein, wobei die von den Funktionseinrichtungen 350 durchsetzte Öffnung 630 in einer unteren Begrenzungsfläche der Führungsschienenelemente 700 gebildet sein kann, wie an einander entgegengesetzten Stirnflächen der Führungsschienenelemente 700 Verbindungselemente 800 befestigt sein können.

Im Folgenden wird ein Ausführungsbeispiel eines Transportsorgans näher erläutert. Dieses Transportorgan eignet sich besonders gut in Verbindung mit dem oben beschriebenen Führungsorgan eingesetzt zu werden.

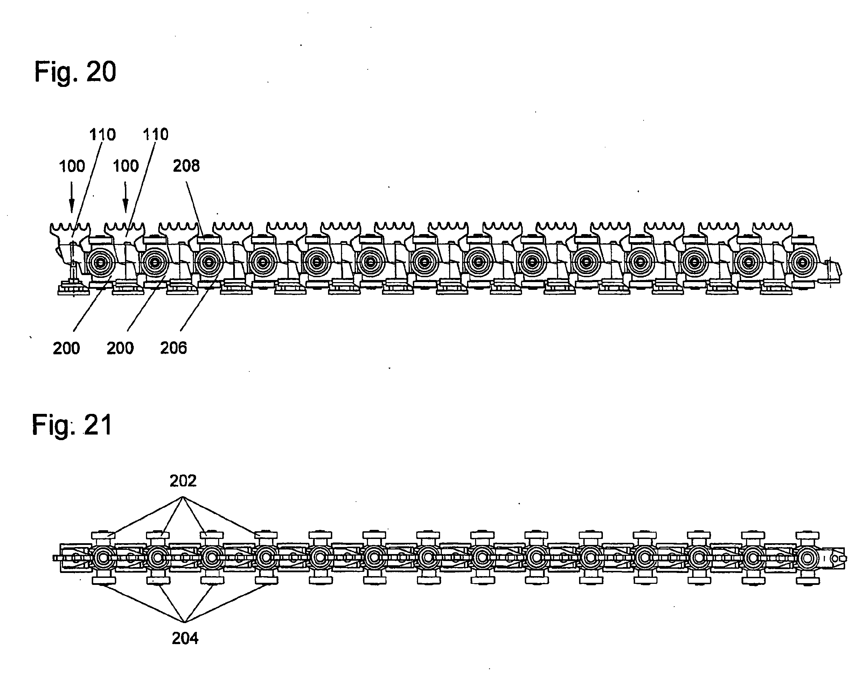

Die in verschiedenen Figuren dargestellten Transportorgane umfasst Funktionsglieder in Form von ersten Kettengliedern 100 und zweiten Kettengliedern 200. Jedes der ersten Kettenglieder 100 weist einen kammförmig ausgeführten Ankopplungsbereich 110 zum Ankoppeln des Transportorgans an eine Antriebskette 530 (Vgl. Fig. 30) auf. Gemäss Fig. 20 und 21 weist jedes der zweiten Kettenglieder 200 insgesamt vier Führungsrollen 202, 204, 206, 208 auf, wobei die Führungsrollen 206 und 208 bezüglich einer ersten gemeinsamen Rollenachse drehbar gelagert sind und die Führungsrollen 202, 204 bezüglich einer zweiten gemeinsamen Rollenachse drehbar gelagert sind. Die erste und die zweite Rollenachse verlaufen senkrecht zueinander und sind in einer Ebene angeordnet. Jedes der ersten Kettenglieder 100 ist zwischen zwei zweiten Kettengliedern 200 angeordnet. Dabei ist jedes der ersten Kettenglieder 100 einerseits zur Bildung einer Funktionsanordnung starr mit einem der zweiten Kettengleider 200 und andererseits zur Bildung einer Gelenkanordnung mit dem anderen der zweiten Kettenglieder 200 verbunden.

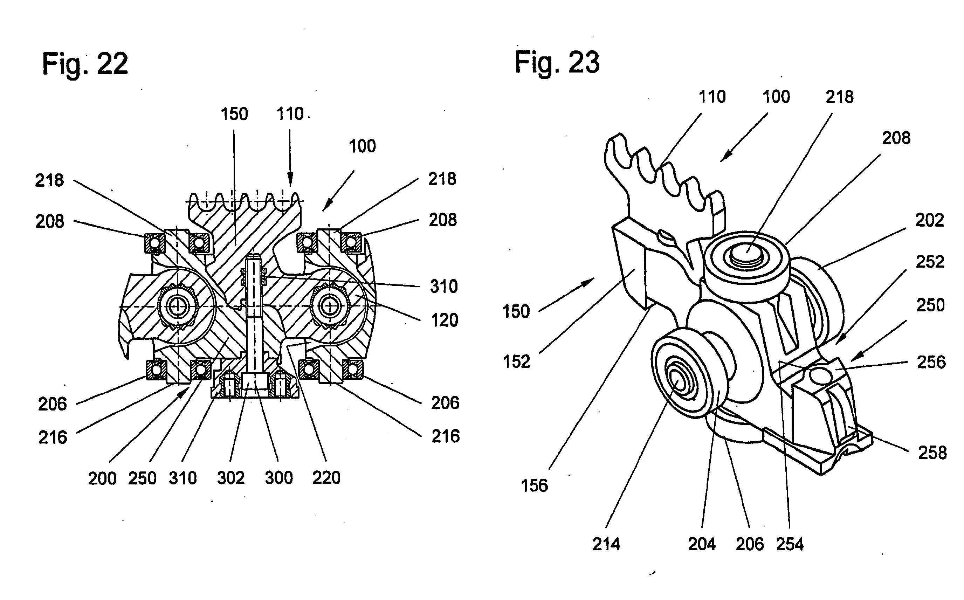

Die zur Bildung der Funktionsanordnung führende starre Verbindung zwischen ersten Kettengliedern 100 und zweiten Kettengliedern 200 ist in Fig. 22 dargestellt. Danach wird zur Verbindung der ersten Kettenglieder 100 mit den zweiten Kettengliedern 200 ein Schraubbolzen 300 eingesetzt, der eine Bohrung in einem Verbindungsbereich 250 des zweiten Kettengliedes 200 durchsetzt und in einen Verbindungsbereich 150 des ersten Kettengliedes 100 eingeschraubt ist. Dazu ist in dem ersten Kettenglied 100 ein Sackloch 152 gebildet, in dem ein Gewindeeinsatz 310 eingesetzt ist, der von dem Schraubbolzen 300 durchsetzt wird. Das Sackloch 152 ist gemäss Fig. 24 unterhalb des Ankopplungsbereichs 110 angeordnet, wobei sämtliche Führungsrollen 202, 204, 206, 208 nach Verbindung des ersten Kettengliedes 100 mit dem zweiten Kettenglied 200 auf der dem Bolzenkopf 302 des Schraubbolzens 300 zugewandten Seite des Ankopplungsbereichs 110 angeordnet sind, so dass der Ankopplungsbereich 110 ausserhalb der Führungsrollen 202, 204, 206, 208 frei zugänglich ist. Der Bolzenkopf 302 liegt auf der dem Ankopplungsbereich 110 abgewandten Seite des zweiten Kettengliedes 200 unter Zwischenschaltung einer Verbindungseinrichtung 310 an. Die Verbindungseinrichtung 310 dient zur Ankopplung von Funktionseinrichtungen, wie etwa Greifer- oder Klammerelementen, oder Lamellen an das Transportorgan.

Wie besonders deutlich in Fig. 23 zu erkennen ist, weist der Verbindungsbereich 250 des ersten Kettengliedes 100 einen Vorsprung 256 und eine rinnenförmige Ausnehmung 252 auf, in die eine Auswölbung 254 des Vorsprungs 256 hineinragt, während der Verbindungsbereich 150 des ersten Kettengliedes 100 komplementär dazu mit einem in die rinnenförmige Ausnehmung 252 eingreifenden Vorsprung 152 und eine den Vorsprung 256 aufnehmenden Einbuchtung 156 ausgeführt ist, wobei der Vorsprung 152 auch noch eine die Ausbuchtung 254 aufnehmende Einbuchtung aufweist, so dass durch Ineinanderstecken des Verbindungsbereichs 150 des ersten Kettengliedes 100 in den Verbindungsbereich 250 des zweiten Kettengliedes 200 eine formschlüssige Verbindung zwischen dem ersten Kettenglied 100 und dem zweiten Kettenglied 200 hergestellt wird, die durch den Vorsprung 256 durchsetzenden und in die zwischen der Einbuchtung 156 und dem Ankopplungsbereich 110 des ersten Kettengliedes 100 gebildeten Sackloch 152 eingeführten Schraubbolzen 300 (Siehe Fig. 22) arretiert werden kann. Zur weiteren Lagesicherung der formschlüssigen Verbindung zwischen dem ersten Verbindungsbereich 150 und dem zweiten Verbindungsbereich 250 weist der Vorsprung 256 auch noch einen nasenartigen Eingreifbereich 258 auf, welcher in eine Einbuchtung in der Ausnehmung 156 eingreift.

Gemäss Fig. 22 ist der Ankopplungsbereich 110 kammartig mit sich quer zur Förderrichtung und etwa parallel zur Achse des Schraubbolzens 300 erstreckenden Kammzinken ausgeführt, wobei zwischen den Kammzinken ein Zwischenraum gebildet ist, in den die Kettenbolzen der Antriebskette 530 (Siehe Fig. 30) eingreifen. Die Führungsrollen 202, 204, 206, 208 sind auf Führungszapfen 212, 214, 216, 218 drehbar gelagert, so dass zwischen den Führungszapfen 212, 214, 216, 218 noch Bauraum zur Herstellung einer gelenkigen Verbindung zwischen ersten Kettengliedern 100 und zweiten Kettengliedern 200 zur Verfügung steht. Die durch die gelenkige Verbindung zwischen den ersten Kettengliedern 100 und den zweiten Kettengliedern 200 hergestellte Gelenkanordnung wird anhand der Fig. 14-17 erläutert.

Gemäss Fig. 23 und 24 weist das erste Kettenglied 100 ein sich in Förderrichtung quer zur Bolzenachse erstreckenden Einsteckbereich 120 auf, der in einem zwischen den Führungszapfen 212, 214, 216, 218 des ersten Kettengliedes 100 gebildeten Aufnahmebereich 220 aufgenommen ist. Der Einsteckbereich 120 ist kreisscheibensegmentförmig ausgeführt, während der Aufnahmebereich 220 kreisscheibensegmentschalenförmig ausgeführt ist, so dass durch die Begrenzungsflächen des Einsteckbereichs 120 und des Aufnahmebereichs 220 eine Führung für eine Schwenkbewegung des ersten Kettengliedes 100 bezüglich dem zweiten Kettenglied 200 um eine durch die zweite Rollenachse gebildete Schwenkachse gebildet ist.

Gemäss Fig. 25 weist die gelenkige Verbindung zwischen dem ersten Kettenglied 100 und dem zweiten Kettenglied 200 ein in dem Einsteckbereich 120 aufgenommenes Kugelsegment 124 auf, wobei zwischen dem Kugelsegment 124 und dem Aussenbereich des Einsteckbereichs 120 ein kugelschalensegmentförmiges Gleitelement 122 aus einem Kunststoffmaterial mit einem geringen Gleitreibungskoeffizienten angeordnet ist. Kugelsegment 124 und Kugelschalensegment 122 durchsetzen den Einsteckbereich 120. Der das Kugelsegment 124 aufnehmende Einsteckbereich 120 wird über das Kugelschalensegment 122 drehbar auf dem Kugelsegment 124 gelagert, so dass das erste Kettenglied 100 mit dem Einsteckbereich 120 nach Einstecken des Einsteckbereichs 120 in den Aufnahmebereich 220 bezüglich der Achse des Verbindungsbolzens 126 und einer senkrecht dazu und parallel zum Schraubbolzen 130 verlaufenden Achse 128 verschwenkbar gelagert ist, wobei die Verschwenkbewegung bezüglich der Schwenkachse 128 durch die Breite des Aufnahmebereichs 220 in der durch die Achse des Bolzens 126 bestimmten Richtung festgelegt wird. Bei Bedarf kann diese Breite vergrössert werden.

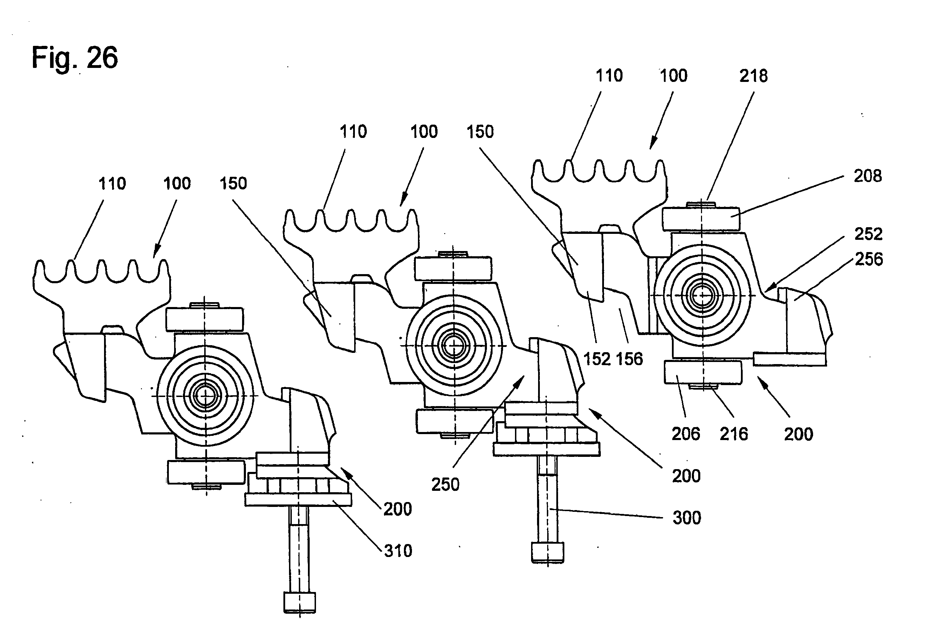

Fig. 26 zeigt ein montiertes Förderorgan, dass aus einer Anzahl Transportorgane besteht, welche jeweils aus einem ersten und einem zweiten Kettenglied bestehen, wobei diese Figur weiter unten näher erläutert wird.

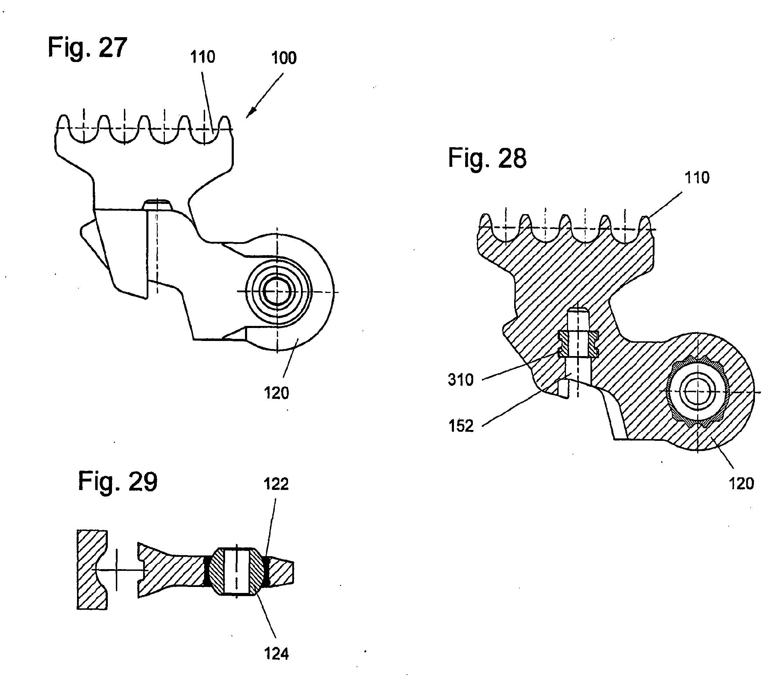

In Fig. 27 und 28 ist das erste Kettenglied 100 im Detail dargestellt. Dabei ist der Einsteckbereich 120 des ersten Kettengliedes 100 gemäss Fig. 28 und 29 durch teilweises Ummanteln des Kugelsegments 124 mit einem Kunststoffmaterial geringer Reibung zur Bildung eines Kugelschalensegments 122 ausgeführt, wobei das so gebildete Kugelsegment 124 zur Bildung des Einsteckbereichs 120 mit einem Kunststoff, insbes. einem faserverstärkten Kunststoff, umspritzt werden kann. Das Kugelschalensegment 122 ist einteilig ausgebildet, kann auch zwei- oder mehrteilig sein. Bei diesem Spritzvorgang können gleichzeitig auch der Verbindungsbereich 150 und der Ankopplungsbereich 110 gebildet werden, wobei auch daran gedacht ist, während des Spritzvorgangs den Gewindeeinsatz 310 in das Sackloch 152 einzusetzen. Gemäss Fig. 26 können Förderorgane resp. Transportorgane montiert werden, indem zunächst Gelenkanordnungen aus ersten Kettenglieder 100 und zweiten Kettenglieder 200 vormontiert, dann in den Verbindungsbereichen 150 bzw. 250 zusammengesteckt und anschliessend mit Hilfe der Schraubbolzen 300 arretiert werden.

Gemäss Fig. 30 können Förderketten 500 längs einer durch eine Führungsschienenanordnung 600 gebildete Förderstrecke gefördert werden, wobei das Transportorgan innerhalb der Führungsschiene 600 aufgenommen ist und mit Hilfe der Führungsrollen 202, 204, 206, 208 an entsprechenden Laufflächen der Führungsschiene 600 geführt ist. Die Ankopplungsbereiche 110 sind in einem Antriebsraum 610 der Führungsschienen 600 aufgenommen und kämmen in Antriebsabschnitten der Führungsschienenanordnung 600 eine Antriebskette 530 einer Antriebseinrichtung 500, die zwei Kettenräder 510 und 520 umläuft. Zur Ankopplung der Antriebseinrichtung 530 muss lediglich eine Ausnehmung in einer Begrenzungsfläche des Antriebsraums 610 hergestellt werden, durch die die Antriebskette 530 in den Bereich der Ankopplungsbereiche 110 gelangen kann.

Die Erfindung ist nicht auf das anhand der Zeichnung erläuterte Ausführungsbeispiel beschränkt. Vielmehr ist auch an anders ausgestaltete Führungsschienenanordnungen mit drei oder weniger Führungsrollen, Führungszapfen od. dgl. gedacht. Ferner können die Ankopplungsbereiche der Transportorgane anders ausgestaltet sein. Auch ist an die kardanische Verbindung einzelner Kettenglieder zur Bildung von Gelenkanordnungen gedacht.

Insbesondere wird hier auf Ausführungsvarianten hingewiesen, soweit sie in der weiteren Beschreibung nicht bereits erläutert worden sind, so auf die Möglichkeiten, dass die Funktionseinheiten, welche jeweils wie erwähnt aus einem ersten Kettenglied und einem zweiten Kettenglied bestehen, wobei diese in Wirkverbindung zueinander stehen, in ihrer Sequenz zur Bildung eines Transportorgans oder Förderorgans kongruent oder quasi-kongruent oder ähnlich oder gemäss ihrer Funktionalität unterschiedlich aufgebaut sein können, wobei die unterschiedlichen Funktionen der beiden Kettenglieder sowie die Kopplungsmöglichkeiten zueinander natürlich erhalten bleiben. Indessen ist es auch möglich, nach einem ersten Kettenglied nicht unmittelbar nur ein zweites Kettenglied folgen zu lassen, sondern nach Bedarf beispielweise nach einem ersten Kettenglied zwei oder mehrere zweite Kettenglieder folgen zu lassen, oder umgekehrt, nämlich zwei oder mehrere erste Kettenglieder hintereinander zu koppeln. Die sequentiell angeordneten Funktionseinheiten weisen dann Mittel oder Verbindungselemente für eine lösbare, oder eine durch Kraftschluss bedingte lösbare, und/oder eine nicht lösbare Verbindung auf. Dies bedeutet zum einen, dass die geometrische und funktionale Ausgestaltung der einzelnen Führungseinheiten über die ganze Bildung eines Förderorgans nicht eine Einheitliche sein muss. Intermediäre betriebsbedingte Variationen sind also möglich. Zum anderen wird hervorgehoben, dass die Funktionseinheiten zueinander mindestens zur Bildung eines Transportorgans unterschiedlich miteinander verbunden sein können. In den meisten Fällen wird man hier für eine lösbare Verbindung, beispielsweise eine Schraubverbindung, optieren. Indessen ist es auch möglich, ein durch Kraftschluss bedingter Zusammenschluss vorzusehen, welche sich bei Bedarf dann wie eine lösbare Verbindung verhält. Schliesslich soll auch nicht ausgeschlossen bleiben, dass die einzelnen Fördereinheiten durch eine nicht lösbare Verbindung, beispielsweise über eine Schweissverbindung, fest miteinander verbunden werden können. Diese Ausführungsmöglichkeiten sind in den verschiedenen Figuren nicht detailliert darstellt, da sie jedem Fachmann geläufig sind. Ferner wird noch hervorgehoben, dass zwischen den einzelnen Funktionseinheiten und/oder Kettengliedern zusätzliche Aggregate eingebaut resp. angeordnet sein können, welche eine bestimmte Funktionalität erfüllen. Diese Funktionalität ist breit gefächert: Sie kann beispielsweise den Betrieb der Funktionseinheiten verbessern, oder es können Aggregate vorgesehen werden, welche mit dem Transport der Druckprodukte oder des Fördergutes im Zusammenhang stehen.

## Patentansprüche

1. Führungsanordnung zum Führen der Bewegung eines zum Fördern von Produkten in einer Förderrichtung ausgelegten Transportorgans längs einer vorzugsweise endlos umlaufenden und durch die Führungsanordnung festgelegten Förderstrecke, wobei das Transportorgan im Wesentlichen aus einer Anzahl von in Wirkverbindung zueinander stehenden Funktionseinheiten besteht, wobei die Führungsanordnung (600) aus einer Anzahl von sequentiell aufeinander folgenden Führungsschienenelementen (700) besteht, welche entlang der Förderstrecke einen tunnelförmigen Führungskanal (620) bilden, wobei mindestens innenwandseitig des Führungskanals Mittel zur Führung eines auf eine rollende Bewegung ausgelegten Transportorgans (100, 200) vorhanden sind, **dadurch gekennzeichnet, dass** das Führungsschienenelement (700) jeweils endseitig mit einem kraftschlüssig gekoppelten Verbindungselement (910, 920) ausgestattet ist, dass das eine Verbindungselement gegenüber dem benachbarten Verbindungselement des darauffolgenden Führungsschienenelementes gegengleiche lagepositionierende Mittel (930, 940; 931, 941) aufweisen, welche eine kongruente Fortsetzung des tunnelförmigen Führungskanals (620) bewerkstelligen, und dass die Führungsanordnung in Ausnehmungen der Verbindungselemente lösbar festlegbare Adapterelemente (850) aufweist, die die in Führungsflächen der Führungsschienenelemente übergehenden Führungsflächen der Verbindungselemente bilden.

2. Führungsanordnung nach Anspruch 1, **dadurch gekennzeichnet, dass** die Mittel zur Führung des Transportorgans entlang der aufeinanderfolgenden Führungsschienenelemente (700) durch Laufflächenelemente (750) gebildet sind, die entlang der die Förderstrecke bildenden Führungsschienenelemente (700) in Förderrichtung ein zusammenhängendes System bilden, und dass die Führungsschienenelemente (700) mindestens kraftschlüssig miteinander verbunden sind.

3. Führungsanordnung nach Anspruch 1, **dadurch gekennzeichnet, dass** die lagepositionierenden Mittel bei dem einen Flansch (910) durch mindestens einen Vorsprung (930, 941) und mindestens eine Vertiefung (940, 931) gebildet sind, welche bei dem gegenüberliegenden Verbindungselement (920) gegengleiche komplementäre Geometrien vorfinden.

4. Führungsanordnung nach Anspruch 3, **dadurch gekennzeichnet, dass** der Vorsprung (930, 941) und die vertiefung (940, 931) eine gegengleiche sich verjüngende Kontur aufweisen.

5. Führungsanordnung nach einem oder mehreren der Ansprüche 1-4, **dadurch gekennzeichnet, dass** die Führungsschienenelemente (700) mindestens entlang einer Rollebene des Transportorgans parallel gegenüberliegend und/oder parallel spiegelbildlich mit einer dem Durchmesser einer zum Transportorgan gehörenden Führungsrolle (202, 204, 206, 208) entsprechenden Beabstandung mit einem Laufsitz geführt sind.

6. Führungsanordnung nach Anspruch 5, **dadurch gekennzeichnet, dass** die Laufflächenelemente (750) parallel spiegelbildlich nur entlang einer Berührungsebene mit der Führungsrolle (202, 204, 206, 208) geführt sind.

7. Führungsanordnung nach einem oder mehreren der Ansprüche 1-6, **dadurch gekennzeichnet, dass** die gekoppelten Führungsschienenelemente (700) gerade Strecken, kurvige Abschnitte oder tordierte Übergänge beschreiben.

8. Führungsanordnung nach einem oder mehreren der Ansprüche 1-7, **dadurch gekennzeichnet, dass** das Transportorgan entlang der Transportstrecke schienengeführt ist und sich entlang einer imaginären Mittellinie des Führungskanals (620) bewegt.

9. Führungsanordnung nach einem oder mehreren der Ansprüche 1-8, **dadurch gekennzeichnet, dass** der Führungskanal (620) eine durchgehende Durchführung (630) für den Durchlauf eines zum Transportorgan (100, 200) gehörenden Kettenantriebes (530) aufweist.

10. Führungsanordnung nach einem der Ansprüche 1-9, **dadurch gekennzeichnet, dass** das Führungsschienenelement (700) einen mehreckigen bis runden Querschnitt aufweist.

11. Führungsanordnung nach einem oder mehreren der Ansprüche 1-10, **dadurch gekennzeichnet, dass** der Führungskanal (620) im Innenraum eine Anzahl fester Trägerbereiche (702, 706; 703, 705; 704, 708; 707, 709) aufweist, welche jeweils mindestens wandseitig angeordnet sind, und dass die Trägerbereiche die Laufflächenelemente (750) mindestens kraftschlüssig tragen.

12. Führungsanordnung nach einem oder mehrere der Ansprüche 1-11, **dadurch gekennzeichnet, dass** wandseitig an einer ersten Wand zwei gegenüberliegend beabstandete Trägerbereiche (702, 703) für ein erstes und ein zweites Laufflächenelement angeordnet sind, dass an der gegenüberliegenden Wand zwei ebenfalls gegenüberliegend angeordnete und beabstandete Trägerbereiche (708, 709) für ein drittes und ein viertes Laufflächenelement vorhanden sind, dass jeweils benachbart zu jedem wandseitigen Trägerbereich weitere Trägerbereiche für ein fünftes (706) und gegenüberliegend sechstes (707), und ein siebentes (704) und ein achtes (705) Laufflächenelement angeordnet sind, deren Laufflächen jeweils zu einem benachbarten Laufflächenelement rechtwinklig angeordnet ist, und dass das erste mit dem zweiten Laufflächenelement, das dritte mit dem vierten Laufflächenelement, das fünfte mit der sechsten Laufflächenelement und das siebente mit dem achten Laufflächenelement paarweise, gegenüberliegend und beabstandet angeordnet sind.

13. Führungsanordnung nach den Ansprüchen 1 und 12, **dadurch gekennzeichnet, dass** die Laufflächen des ersten gegenüber dem zweiten, das dritte gegenüber dem vierten, das fünfte gegenüber dem sechsten und das siebente gegenüber dem achten Laufflächenelement mit einem Abstand gegenüberliegend angeordnet sind, und dass der Abstand annähernd dem Durchmesser der zum Transportorgan gehörenden Führungsrollen (202, 204, 206, 208) entspricht.

14. Führungsanordnung nach einem oder mehrere der Ansprüche 11-13, **dadurch gekennzeichnet, dass** mindestens der erste (702), dritte (708), fünfte (706), siebente (704) Trägerbereich Laufflächenelemente (750) tragen.

## Claims

1. Guide arrangement for guiding the motion of a transporter element designed to convey products in a conveying direction along a preferably endlessly-circulating conveyor path determined by the guide arrangement, wherein the transporter element essentially consists of a number of actively connected functional units, the guide arrangement (600) consists of a number of successive guide rail elements (700) which form a tunnel-like guide channel (620) along the conveyor path, and means for guiding a transporter element (100, 200) designed for rolling motion are present on at least the internal-wall side of the guide channel, **characterized in that** each guide rail element (700) is equipped at its end with a non-positively coupled connecting element (910, 920), **in that** a given connecting element has positioning means (930, 940; 931, 941) diametrically opposed to the adjacent connecting element of the next guide rail element which realize a congruent continuation of the tunnel-like guide channel (620), and **in that** the guide arrangement has releasably fixable adapter elements (850) in recesses of the connecting elements that form guide surfaces of the connecting elements faying with guide surfaces of the guide rail elements.

2. Guide arrangement according to Claim 1, **characterized in that** the means for guiding the transporter element along the successive guide rail elements (700) are formed by running surface elements (750) which form a connected system in the conveying direction along the guide rail elements (700) forming the conveyor path, and **in that** the guide rail elements (700) are at least non-positively interconnected.

3. Guide arrangement according to Claim 1, **characterized in that** the positioning means are formed on a given flange (910) by at least one projection (930, 941) and at least one recess (940, 931) which marry up with complementary geometries on the opposing connecting element (920).

4. Guide arrangement according to Claim 3, **characterized in that** the projection (930, 941) and the recess (940, 931) have a diametrically opposed tapering contour.

5. Guide arrangement according to one or more of Claims 1-4, **characterized in that** the guide rail elements (700) are led, at least along a rolling plane of the transporter element, parallel and opposite and/or parallel and mirror-reversed, and set apart at a distance corresponding to the diameter of a guide roller (202, 204, 206, 208) forming part of the transporter element, with a running fit.

6. Guide arrangement according to Claim 5, **characterized in that** the running surface elements (750) are led parallel and mirror-reversed only along a plane of contact with the guide roller (202, 204, 206, 208).

7. Guide arrangement according to one or more of Claims 1-6, **characterized in that** the coupled guide rail elements (700) describe straights, curves, or twisting transitions.

8. Guide arrangement according to one or more of Claims 1-7, **characterized in that** the transporter element is rail-guided along the conveyor path and moves along an imaginary centreline of the guide channel (620).

9. Guide arrangement according to one or more of Claims 1-8, **characterized in that** the guide channel (620) has a continuous lead-through (630) for the passage of a chain drive (530) forming part of the transporter element (100, 200).

10. Guide arrangement according to one or more of Claims 1-9, **characterized in that** the guide rail element (700) has a polygonal-to-round cross-section.

11. Guide arrangement according to one or more of Claims 1-10, **characterized in that** the guide channel (620) has a number of fixed carrier regions (702, 706; 703, 705; 704, 708; 707, 709) within its interior, each arranged at least on a wall side, and **in that** the carrier regions support the running surface elements (750) at least in a non-positive manner.

12. Guide arrangement according to one or more of Claims 1-11, **characterized in that** two opposing, spaced-apart carrier regions (702, 703) for a first and a second running surface element are arranged on a wall side on a first wall, **in that** two likewise opposing, spaced-apart carrier regions (708, 709) for a third and a fourth running surface element are present on the opposite wall, **in that** further carrier regions for a fifth (706) and an opposite sixth (707), and a seventh (704) and an eighth (705), running surface element are each arranged adjacently to each wall-side carrier region, with each of their running surfaces arranged at right angles to an adjacent running surface element, and **in that** the first and second running surface element, the third and fourth running surface element, the fifth and sixth running surface element, and the seventh and eighth running surface element, are arranged in pairs, opposite one another, and spaced apart.

13. Guide arrangement according to Claims 1 and 12, **characterized in that** the running surfaces of the first running surface element *vis-à-vis* the second, the third *vis-à-vis* the fourth, the fifth *vis-à-vis* the sixth, and the seventh *vis-à-vis* the eighth, are arranged opposite and spaced apart at a distance which approximately corresponds to the diameter of the guide rollers (202, 204, 206, 208) forming part of the transport element.

14. Guide arrangement according to one or more of Claims 11-13, **characterized in that** at least the first (702), third (708), fifth (706), and seventh (704) carrier regions carry running surface elements (750).

## Revendications

1. Système de guidage pour guider le mouvement d'un organe de transport, conçu pour transporter des produits dans une direction de transport, le long d'un parcours de transport de préférence sans fin et défini par le système de guidage, sachant que l'organe de transport est constitué pour l'essentiel d'une pluralité d'unités fonctionnelles fonctionnellement reliées entre elles, sachant que le système de guidage (600) est constitué d'une pluralité d'éléments de rail de guidage (700) qui se succèdent séquentiellement et qui forment un canal de guidage (620) en forme de tunnel le long du parcours de transport, et sachant que des moyens servant à guider un organe de transport (100, 200) destiné à effectuer un mouvement roulant sont disposés au moins du côté de la paroi intérieure du canal de guidage, **caractérisé en ce que** l'élément de rail de guidage (700) est équipé à chaque extrémité d'un élément de liaison respectif (910, 920) couplé à force, **en ce que** l'un des éléments de liaison présente des moyens de positionnement (930, 940 ; 931, 941) inversement symétriques par rapport à l'élément de liaison voisin de l'élément de rail de guidage consécutif, moyens qui réalisent un prolongement congruent du canal de guidage (620) en forme de tunnel, et **en ce que** le système de guidage présente des éléments adaptateurs (850) qui peuvent être fixés de manière amovible dans des évidements des éléments de liaison et qui forment les surfaces de guidage des éléments de liaison qui se raccordent à des surfaces de guidage des éléments de rail de guidage.

2. Système de guidage selon la revendication 1, **caractérisé en ce que** les moyens pour guider l'organe de transport le long des éléments de rail de guidage successifs (700) sont formés par des éléments de surface de roulement (750) qui forment, le long des éléments de rail de guidage (700) constituant le parcours de transport, un système continu dans la direction de transport, et **en ce que** les éléments de rail de guidage (700) sont reliés entre eux au moins à force.

3. Système de guidage selon la revendication 1, **caractérisé en ce que** les moyens de positionnement sont formés sur l'une (910) des brides par au moins une saillie (930, 941) et au moins un renfoncement (940, 931), qui trouvent des géométries complémentaires inversement symétriques sur l'autre élément de liaison opposé (920).

4. Système de guidage selon la revendication 3, **caractérisé en ce que** la saillie (930, 941) et le renfoncement (940, 931) présentent un contour inversement symétrique allant en se rétrécissant.

5. Système de guidage selon une ou plusieurs des revendications 1 à 4, **caractérisé en ce que** les éléments de rail de guidage (700) sont, au moins le long d'un plan de roulement de l'organe de transport, guidés avec un ajustement tournant en opposition parallèle et/ou en symétrie parallèle avec un espacement correspondant au diamètre d'un rouleau de guidage (202, 204, 206, 208) faisant partie de l'organe de transport.

6. Système de guidage selon la revendication 5, **caractérisé en ce que** les éléments de surface de roulement (750) ne sont guidés en symétrie parallèle que le long d'un plan de contact avec le rouleau de guidage (202, 204, 206, 208).

7. Système de guidage selon une ou plusieurs des revendications 1 à 6, **caractérisé en ce que** les éléments de rail de guidage accouplés (700) décrivent des tronçons rectilignes, des parties courbes ou des transitions torsadées.

8. Système de guidage selon une ou plusieurs des revendications 1 à 7, **caractérisé en ce que** l'organe de transport est guidé sur rail le long du parcours de transport et se déplace le long d'une ligne médiane imaginaire du canal de guidage (620).

9. Système de guidage selon une ou plusieurs des revendications 1 à 8, **caractérisé en ce que** le canal de guidage (620) présente un passage continu (630) pour le passage d'un entraînement par chaîne (530) faisant partie de l'organe de transport (100, 200).

10. Système de guidage selon l'une des revendications 1 à 9, **caractérisé en ce que** l'élément de rail de guidage (700) présente une section polygonale à ronde.

11. Système de guidage selon une ou plusieurs des revendications 1 à 10, **caractérisé en ce que** le canal de guidage (620) présente à l'intérieur une pluralité de régions porteuses fixes (702, 706 ; 703, 705 ; 704, 708 ; 707, 709) qui sont respectivement disposées au moins côté paroi, et **en ce que** les régions porteuses portent les éléments de surface de roulement (750) au moins à force.

12. Système de guidage selon une ou plusieurs des revendications 1 à 11, **caractérisé en ce que**, côté paroi, deux régions porteuses (702, 703) distantes en vis-à-vis, pour un premier et un deuxième éléments de surface de roulement, sont disposées contre une première paroi, **en ce que** deux régions porteuses (708, 709) elles aussi distantes et disposées en vis-à-vis, pour un troisième et un quatrième éléments de surface de roulement, sont présentes sur la paroi opposée, **en ce que** d'autres régions porteuses pour un cinquième (706) et en vis-à-vis un sixième (707), et pour un septième (704) et un huitième (705) éléments de surface de roulement, éléments dont les surfaces de roulement sont respectivement disposées à angle droit d'un élément de surface de roulement voisin, sont respectivement disposées au voisinage de chaque région porteuse côté paroi, et **en ce que** le premier et le deuxième éléments de surface de roulement, le troisième et le quatrième éléments de surface de roulement, le cinquième et le sixième éléments de surface de roulement, et le septième et le huitième éléments de surface de roulement sont disposés par paires, en vis-à-vis et en étant mutuellement distants.

13. Système de guidage selon les revendications 1 et 12, **caractérisé en ce que** les surfaces de roulement du premier élément de surface de roulement par rapport au deuxième, du troisième par rapport au quatrième, du cinquième par rapport au sixième et du septième par rapport au huitième sont disposées en vis-à-vis à distance, et **en ce que** la distance correspond approximativement au diamètre des rouleaux de guidage (202, 204, 206, 208) faisant partie de l'organe de transport.

14. Système de guidage selon une ou plusieurs des revendications 11 à 13, **caractérisé en ce qu'**au moins la première (702), la troisième (708), la cinquième (706) et la septième (704) régions porteuses portent des éléments de surface de roulement (750).
